(19) **Europäisches Patentamt / European Patent Office / Office européen des brevets**

(11) **EP 4 518 464 A1**

(12) **EUROPEAN PATENT APPLICATION**
published in accordance with Art. 153(4) EPC

(43) Date of publication:
**05.03.2025 Bulletin 2025/10**

(21) Application number: **23795596.8**

(22) Date of filing: **28.04.2023**

(51) International Patent Classification (IPC):
**H04W 64/00** $^{(2009.01)}$   **H04W 24/10** $^{(2009.01)}$

(52) Cooperative Patent Classification (CPC):
**G01S 19/44; H04W 24/10; H04W 64/00**

(86) International application number:
**PCT/CN2023/091441**

(87) International publication number:
**WO 2023/208164 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.04.2022  CN 202210476532**

(71) Applicant: **Datang Mobile Communications Equipment Co., Ltd.**
**Beijing 100085 (CN)**

(72) Inventors:
 • **YU, Zhe**
  **Beijing 100085 (CN)**
 • **DA, Ren**
  **Beijing 100085 (CN)**

 • **REN, Bin**
  **Beijing 100085 (CN)**
 • **REN, Xiaotao**
  **Beijing 100085 (CN)**
 • **ZHANG, Zhenyu**
  **Beijing 100085 (CN)**
 • **FANG, Rongyi**
  **Beijing 100085 (CN)**
 • **SHI, Yuangu**
  **Beijing 100085 (CN)**
 • **LI, Hui**
  **Beijing 100085 (CN)**

(74) Representative: **Maiwald GmbH**
 **Engineering**
 **Elisenhof**
 **Elisenstrasse 3**
 **80335 München (DE)**

(54) **INFORMATION TRANSMISSION METHOD AND CARRIER PHASE POSITIONING METHOD AND APPARATUS**

(57)    The present disclosure relates to the technical field of communication technologies, and provided are an information transmission method and a carrier phase positioning method and device. The information transmission method includes: receiving, by a first device, PRS and position information of at least two second devices, sent by the at least two second devices; determining, by the first device, a correction parameter according to the PRS and position information of the at least two second devices, where the correction parameter is used to correct a carrier phase measurement value of a target user equipment (UE); transmitting, by the first device, first information to the target UE or a location management function (LMF) entity; wherein the first information includes the correction parameter.

receiving, by a first device, PRS and position information of at least two second devices, sent by the at least two second devices —11

determining, by the first device, a correction parameter according to the PRS and position information of the at least two second devices; where the correction parameter is used to correct a carrier phase measurement value of a target UE —12

transmitting, by the first device, first information to a target UE or an LMF entity; where the first information includes the correction parameter —13

**FIG. 1**

EP 4 518 464 A1

**Description**

**CROSS-REFERENCE TO RELATED APPLICATION**

The present application is filed based on and claims the priority of Chinese Application No. 202210476532.7 filed on April 29, 2022, the disclosure of which are incorporated in their entireties by reference herein.

**TECHNICAL FIELD**

The present disclosure relates to the field of communication technologies, and in particular to an information transmission method, carrier phase positioning method and device.

**BACKGROUND**

Global navigation satellite system (GNSS) signal-based carrier phase positioning measurement technology is a currently main method for centimeter-level high-precision positioning. In the new radio (NR) system, the carrier phase positioning technology based on orthogonal frequency division multiplexing (OFDM) signal of wireless cellular network will be further studied. Since transmission and reception timing errors of user equipment (UE)/base station may cause measurement errors of carrier phases, which affects positioning accuracy.

**SUMMARY**

The present disclosure provides an information transmission method, carrier phase positioning method and device, which can solve the problem of poor positioning accuracy in carrier phase positioning technology based on OFDM signals.

In a first aspect, one embodiment of the present disclosure provides an information transmission method, including:

receiving, by a first device, positioning reference signals (PRS) and position information of at least two second devices, sent by the at least two second devices;
determining, by the first device, a correction parameter according to the PRS and position information of the at least two second devices; wherein the correction parameter is used to correct a carrier phase measurement value of a target user equipment (UE);
transmitting, by the first device, first information to the target UE or a location management function (LMF) entity; wherein the first information includes the correction parameter.

Optionally, the first information further includes at least one of the following:

reliability information of the correction parameter;
base station identifier information;
transmission channel timing error group identifier (ID);
reception channel timing error group ID corresponding to the correction parameter;
reception beam identifier information corresponding to the correction parameter;
valid time range of the correction parameter; or,
reporting time stamp of the correction parameter.

Optionally, the determining, by the first device, a correction parameter according to the PRS and position information of the at least two second devices, includes:

determining, by the first device, a distance difference between the at least two second devices and the first device, according to the position information of the at least two second devices and position information of the first device;
according to the PRS of the at least two second devices, determining, by the first device, a carrier phase difference for receiving the PRS of the at least two second devices;
determining, by the first device, a timing error correction parameter according to the distance difference and the carrier phase difference, and determining the timing error correction parameter as the correction parameter.

Optionally, the determining, by the first device, a timing error correction parameter according to the distance difference and the carrier phase difference, includes:

determining the timing error correction parameter with the following formula:

$$\lambda\varphi_{corr}^{ij,Tx\ TEGi,j}(t_1) = d_{l,Rx\ TEGi,j}^{ij,Tx\ TEGi,j} - \lambda\varphi_{l,Rx\ TEGi,j}^{ij,Tx\ TEGi,j}(t_1)$$

wherein $\lambda\varphi_{corr}^{ij,Tx\ TEGi,j}(t_1)$ is the timing error correction parameter; $d_{l,Rx\ TEGi,j}^{ij,Tx\ TEGi,j}$ is the distance difference;

$\varphi_{l,Rx\ TEGi,j}^{ij,Tx\ TEGi,j}(t_1)$ is the carrier phase difference; and $\lambda$ is a carrier wavelength.

Optionally, the determining, by the first device, a correction parameter according to the PRS and position information of the at least two second devices, includes:

determining, by the first device, a timing error correction parameter at a first moment according to PRS and position information of the at least two second devices at the first moment;
determining, by the first device, a timing error correction parameter at a second moment according to PRS and position information of the at least two second devices at the second moment;
determining, by the first device, a timing error correction parameter change rate according to the timing error correction parameter at the first moment and the timing error correction parameter at the second moment, and determining the timing error correction parameter and the timing error correction parameter change rate as the correction parameter.

Optionally, the determining, by the first device, a timing error correction parameter change rate according to the timing error correction parameter at the first moment and the timing error correction parameter at the second moment, includes:

determining the timing error correction parameter change rate through the following formula:

$$\lambda\dot{\varphi}_{corr}^{ij,Tx\ TEGi,j} = \frac{\lambda\varphi_{corr}^{ij,Tx\ TEGi,j}(t_1) - \lambda\varphi_{corr}^{ij,Tx\ TEGi,j}(t_0)}{t_1 - t_0}$$

where $\lambda\dot{\varphi}_{corr}^{ij,Tx\ TEGi,j}$ is the timing error correction parameter change rate; $\lambda\varphi_{corr}^{ij,Tx\ TEGi,j}(t_0)$ is the timing error correction parameter at the first moment; $\lambda\varphi_{corr}^{ij,Tx\ TEGi,j}(t_1)$ is the timing error correction parameter at the second moment; $t_0$ is the first moment; and t1 is the second moment.

Optionally, the transmitting, by the first device, first information to the target UE or a location management function (LMF) entity, includes:

transmitting, by the first device, one correction parameter to the target UE or the LMF entity; wherein the correction parameter includes: the timing error correction parameter, or the correction parameter includes: the timing error correction parameter and the timing error correction parameter change rate;
or,
transmitting, by the first device, a correction parameter corresponding to each moment to the target UE or the LMF entity at N moments, respectively; wherein the correction parameter includes: the timing error correction parameter and the timing error correction parameter change rate, wherein N is a positive integer greater than 1.

Optionally, the transmitting, by the first device, first information to the target UE or a location management function (LMF) entity, includes:

transmitting the first information to the target UE or the LMF entity, in a periodic transmission manner;
or,
transmitting the first information to the target UE or the LMF entity, according to high-layer signaling;
or,

transmitting the first information to the target UE or the LMF entity when the first device determines that a triggering condition for correction parameter reporting is met.

Optionally, the triggering condition for the correction parameter reporting includes: a parameter value of the reliability information reaches a first threshold.

In a second aspect, one embodiment of the present disclosure provides an information transmission method, including:

receiving, by a base station, first sounding reference signal (SRS) and position information of at least two first devices sent by the at least two first devices;

determining, by the base station, a correction parameter according to the first SRS and position information of the at least two first devices sent by the at least two first devices; wherein the correction parameter is used to correct a carrier phase measurement value;

transmitting, by the base station, second information to a location management function (LMF) entity; wherein the second information includes the correction parameter.

Optionally, the method further includes:

receiving, by the base station, a second SRS sent by a target user equipment (UE);

performing, by the base station, carrier phase measurement according to the second SRS to obtain a carrier phase measurement value;

transmitting, by the base station, the carrier phase measurement value to the LMF entity.

Optionally, the second information further includes at least one of the following:

reliability information of the correction parameter;

reception channel timing error group identifier (ID) corresponding to the correction parameter;

reception beam identifier information corresponding to the correction parameter;

valid time range of the correction parameter; or,

reporting time stamp of the correction parameter.

Optionally, the determining, by the base station, a correction parameter according to the first SRS and position information of the at least two first devices sent by the at least two first devices, includes:

determining, by the base station, a distance difference between the at least two first devices and the base station according to the position information of the at least two first devices and the position information of the base station;

determining, by the base station, a carrier phase difference for receiving the SRS of the at least two first devices based on the first SRS of the at least two first devices;

determining, by the base station, a timing error correction parameter according to the distance difference and the carrier phase difference, and determining the timing error correction parameter as the correction parameter.

Optionally, the determining, by the base station, a correction parameter according to the first SRS and position information of the at least two first devices sent by the at least two first devices, includes:

determining, by the base station, a timing error correction parameter at a first moment according to first SRS and position information of the at least two first devices at the first moment;

determining, by the base station, a timing error correction parameter at a second moment according to first SRS and position information of the at least two first devices at the second moment;

determining, by the base station, a timing error correction parameter change rate according to the timing error correction parameter at the first moment and the timing error correction parameter at the second moment, and determining the timing error correction parameter and the timing error correction parameter change rate as the correction parameter.

Optionally, the transmitting, by the base station, the carrier phase measurement value to the LMF entity, includes:

transmitting, by the base station, one correction parameter to the LMF entity; wherein the correction parameter includes: the timing error correction parameter used to correct a carrier phase measurement value, or the correction parameter includes: the timing error correction parameter and the timing error correction parameter change rate;

or,
transmitting, by the base station, one correction parameter corresponding to each moment to the LMF entity at N moments, respectively; wherein the correction parameter includes: the timing error correction parameter and the timing error correction parameter change rate, where N is an integer greater than 1.

Optionally, the transmitting, by the base station, the carrier phase measurement value to the LMF entity, includes:

transmitting, by the base station, the second information to the LMF entity, in a periodic transmission manner;
or,
transmitting, by the base station, the second information to the LMF entity, according to high-layer signaling;
or,
transmitting the second information to the LMF entity when the base station determines that a triggering condition for correction parameter reporting is met.

Optionally, the triggering condition for the correction parameter reporting includes: a parameter value of the reliability information reaches a first threshold.

In a third aspect, one embodiment of the present disclosure provides a carrier phase positioning method, including:

receiving, by a location management function (LMF) entity, a correction parameter and a carrier phase measurement value of a target user equipment (UE);
performing, by the LMF entity, compensation processing on the carrier phase measurement value according to the correction parameter;
performing, by the LMF entity, positioning calculation processing for the target UE according to the compensated carrier phase measurement value.

Optionally, the receiving, by a location management function (LMF) entity, a correction parameter and a carrier phase measurement value of a target user equipment (UE), includes:

receiving, by the LMF entity, first information transmitted by a first device, and receiving a carrier phase measurement value transmitted by the target UE; wherein the first information includes a correction parameter determined by the first device;
and/or,
receiving, by the LMF entity, second information transmitted by a base station, and receiving a carrier phase measurement value of measuring a sounding reference signal (SRS) of the target UE, transmitted by the base station; wherein the second information includes a correction parameter determined by the base station.

Optionally, the first information further includes at least one of the following:

reliability information of the correction parameter;
base station identifier information;
transmission channel timing error group identifier (ID);
reception channel timing error group ID corresponding to the correction parameter;
reception beam identifier information corresponding to the correction parameter;
valid time range of the correction parameter; or,
reporting time stamp of the correction parameter;
and/or,
the second information further includes at least one of the following:
reliability information of the correction parameter;
reception channel timing error group ID corresponding to the correction parameter;
reception beam identifier information corresponding to the correction parameter;
valid time range of the correction parameter; or,
reporting time stamp of the correction parameter.

Optionally, the performing, by the LMF entity, compensation processing on the carrier phase measurement value according to the correction parameter, includes:

determining, by the LMF entity, a carrier phase measurement value of an optimal link, according to the reliability information;

performing, by the LMF entity, compensation processing on the carrier phase measurement value of the optimal link according to the correction parameter.

Optionally, the correction parameter includes: a timing error correction parameter;

the performing, by the LMF entity, compensation processing on the carrier phase measurement value of the optimal link according to the correction parameter, includes:

determining, by the LMF entity, a sum of the carrier phase measurement value of the optimal link and the timing error correction parameter as the compensated carrier phase measurement value.

Optionally, the correction parameter includes: a timing error correction parameter and a time change rate of the timing error correction parameter;

the performing, by the LMF entity, compensation processing on the carrier phase measurement value of the optimal link according to the correction parameter, includes:

determining, by the LMF entity, a sum of a carrier phase measurement value of the optimal link at a first moment and the timing error correction parameter at the first moment as a compensated carrier phase measurement value at the first moment;

and/or,

determining, by the LMF entity, a timing error correction parameter at a second moment based on the timing error correction parameter at the first moment and the time change rate; and determining a sum of the carrier phase measurement value of the optimal link at the second moment and the timing error correction parameter at the second moment, as the compensated carrier phase measurement value at the second moment.

Optionally, the receiving, by a location management function (LMF) entity, a correction parameter, includes:

receiving, by the LMF entity, N correction parameters; wherein the correction parameters include: a timing error correction parameter and a time change rate of the timing error correction parameter, N is a positive integer greater than 1;

the performing, by the LMF entity, compensation processing on the carrier phase measurement value of the optimal link according to the correction parameter, includes:

determining, by the LMF entity, a first timing error correction parameter and a first time change rate according to the N correction parameters;

determining, by the LMF entity, a second timing error correction parameter based on the first timing error correction parameter and the first time change rate;

determining, by the LMF entity, a sum of the carrier phase measurement value of the optimal link and the second timing error correction parameter as a compensated carrier phase measurement value.

Optionally, the N correction parameters include: correction parameters transmitted by one first device or base station at N moments, respectively; or correction parameters transmitted by N first devices or base stations at the same moment.

Optionally, the determining, by the LMF entity, a first timing error correction parameter and a first time change rate according to the N correction parameters, includes:

determining, by the LMF entity, a sum of weighted timing error correction parameters in the N correction parameters as the first timing error correction parameter; and determining a sum of weighted time change rates in the N correction parameters as the first time change rate;

or,

determining, by the LMF entity, an average of timing error correction parameters in the N correction parameters as the first timing error correction parameter; and determining an average of time change rates in the N correction parameters value as the first time change rate;

or,

determining, by the LMF entity, a maximum timing error correction parameter or a minimum timing error correction parameter in the N correction parameters as the first timing error correction parameter; and determining a time change rate corresponding to the first timing error correction parameter as the first time change rate.

In a fourth aspect, one embodiment of the present disclosure provides a carrier phase positioning method, including:

receiving, by a user equipment (UE), first information and PRSs transmitted by at least two second devices; wherein the first information includes a correction parameter determined by a first device;

performing, by the UE, carrier phase measurement based on the PRS transmitted by the at least two second devices, thereby obtaining a carrier phase measurement value;

performing, by the UE, compensation processing on the carrier phase measurement value according to the first information;

performing, by the UE, positioning calculation processing based on the compensated carrier phase measurement value.

Optionally, the receiving, by a user equipment (UE), first information, includes:

receiving, by the UE, first information transmitted by the first device;
and/or,
receiving, by the UE, first information transmitted by a location management function (LMF) entity.

Optionally, the first information further includes at least one of the following:

reliability information of the correction parameter;
base station identifier information;
transmission channel timing error group identifier (ID);
reception channel timing error group ID corresponding to the correction parameter;
reception beam identifier information corresponding to the correction parameter;
valid time range of the correction parameter; or,
reporting time stamp of the correction parameter.

Optionally, the performing, by the UE, compensation processing on the carrier phase measurement value according to the first information, includes:

determining, by the UE, a carrier phase measurement value of an optimal link based on the reliability information;
compensating, by the UE, the carrier phase measurement value of the optimal link according to the correction parameter.

Optionally, the correction parameter includes a timing error correction parameter;
wherein the compensating, by the UE, the carrier phase measurement value of the optimal link according to the correction parameter, includes:
determining, by the UE, a sum of the carrier phase measurement value of the optimal link and the timing error correction parameter as the compensated carrier phase measurement value.

Optionally, the correction parameter includes a timing error correction parameter and a time change rate of the timing error correction parameter;
wherein the compensating, by the UE, the carrier phase measurement value of the optimal link according to the correction parameter, includes:

determining, by the UE, a sum of a carrier phase measurement value of the optimal link at a first moment and a timing error correction parameter at the first moment as a compensated carrier phase measurement value at the first moment;
and/or,
determining, by the UE, a timing error correction parameter at a second moment based on the timing error correction parameter at the first moment and the time change rate; and determining a sum of the carrier phase measurement value of the optimal link at the second moment and the timing error correction parameter at the second moment, as the compensated carrier phase measurement value at the second moment.

Optionally, the UE receiving the correction parameter and reliability information, includes:

receiving, by the UE, N correction parameters and the reliability information; wherein the correction parameters include: a timing error correction parameter and a time change rate of the timing error correction parameter, N is a positive integer greater than 1;
wherein the compensating, by the UE, the carrier phase measurement value of the optimal link according to the correction parameter, includes:

determining, by the UE, a first timing error correction parameter and a first time change rate according to the N correction parameters;

determining, by the UE, a second timing error correction parameter based on the first timing error correction parameter and the first time change rate;

determining, by the UE, a sum of the carrier phase measurement value of the optimal link and the second timing error correction parameter as a compensated carrier phase measurement value.

Optionally, the N correction parameters include: correction parameters transmitted by one first device or LMF entity at N moments, respectively; or correction parameters transmitted by N first devices or LMF entities at the same moment.

Optionally, the determining, by the UE, a first timing error correction parameter and a first time change rate according to the N correction parameters, includes:

determining, by the UE, a sum of weighted timing error correction parameters in the N correction parameters as the first timing error correction parameter; and determining a sum of weighted time change rates in the N correction parameters as the first time change rate;

or,

determining, by the UE, an average of timing error correction parameters in the N correction parameters as the first timing error correction parameter; and determining an average of time change rates in the N correction parameters value as the first time change rate;

or,

determining, by the UE, a maximum timing error correction parameter or a minimum timing error correction parameter in the N correction parameters as the first timing error correction parameter; and determining a time change rate corresponding to the first timing error correction parameter as the first time change rate.

In a fifth aspect, one embodiment of the present disclosure provides an information transmission device, including: a memory, a transceiver, and a processor;

wherein the memory is used to store a computer program; the transceiver is used to send and receive data under the control of the processor; the processor is used to read the computer program in the memory and perform the following operations:

receiving positioning reference signals (PRS) and position information of at least two second devices, sent by the at least two second devices;

determining a correction parameter according to the PRS and position information of the at least two second devices; wherein the correction parameter is used to correct a carrier phase measurement value of a target user equipment (UE);

transmitting first information to the target UE or a location management function (LMF) entity; wherein the first information includes the correction parameter.

Optionally, the first information further includes at least one of the following:

reliability information of the correction parameter;
base station identifier information;
transmission channel timing error group identifier (ID);
reception channel timing error group ID corresponding to the correction parameter;
reception beam identifier information corresponding to the correction parameter;
valid time range of the correction parameter; or,
reporting time stamp of the correction parameter.

Optionally, the processor is used to read the computer program in the memory and perform the following operations:

transmitting one correction parameter to the target UE or the LMF entity; wherein the correction parameter includes: the timing error correction parameter, or the correction parameter includes: the timing error correction parameter and the timing error correction parameter change rate;

or,

transmitting a correction parameter corresponding to each moment to the target UE or the LMF entity at N moments, respectively; wherein the correction parameter includes: the timing error correction parameter and the timing error correction parameter change rate, wherein N is a positive integer greater than 1.

Optionally, the processor is used to read the computer program in the memory and perform the following operations:

transmitting the first information to the target UE or the LMF entity, in a periodic transmission manner;
or,
transmitting the first information to the target UE or the LMF entity, according to high-layer signaling;
or,
transmitting the first information to the target UE or the LMF entity when the first device determines that a triggering condition for correction parameter reporting is met.

In a sixth aspect, one embodiment of the present disclosure provides an information transmission device, including:

a receiving unit configured to receive positioning reference signals (PRS) and position information of at least two second devices, sent by the at least two second devices;
a processing unit configured to determine a correction parameter according to the PRS and position information of the at least two second devices; wherein the correction parameter is used to correct a carrier phase measurement value of a target user equipment (UE);
a transmission unit configured to transmit first information to the target UE or a location management function (LMF) entity; wherein the first information includes the correction parameter.

In a seventh aspect, one embodiment of the present disclosure provides an information transmission device, including: a memory, a transceiver, and a processor;
wherein the memory is used to store a computer program; the transceiver is used to send and receive data under the control of the processor; the processor is used to read the computer program in the memory and perform the following operations:

receiving first sounding reference signal (SRS) and position information of at least two first devices sent by the at least two first devices;
determining a correction parameter according to the first SRS and position information of the at least two first devices sent by the at least two first devices; wherein the correction parameter is used to correct a carrier phase measurement value;
transmitting second information to a location management function (LMF) entity; wherein the second information includes the correction parameter.

Optionally, the processor is used to read the computer program in the memory and perform the following operations:

receiving a second SRS sent by a target user equipment (UE);
performing carrier phase measurement according to the second SRS to obtain a carrier phase measurement value;
transmitting the carrier phase measurement value to the LMF entity.

Optionally, the second information further includes at least one of the following:

reliability information of the correction parameter;
reception channel timing error group identifier (ID) corresponding to the correction parameter;
reception beam identifier information corresponding to the correction parameter;
valid time range of the correction parameter; or,
reporting time stamp of the correction parameter.

Optionally, the processor is used to read the computer program in the memory and perform the following operations:

transmitting one correction parameter to the LMF entity; wherein the correction parameter includes: the timing error correction parameter used to correct a carrier phase measurement value, or the correction parameter includes: the timing error correction parameter and the timing error correction parameter change rate;

or,

transmitting one correction parameter corresponding to each moment to the LMF entity at N moments, respectively; wherein the correction parameter includes: the timing error correction parameter and the timing error correction parameter change rate, where N is an integer greater than 1.

Optionally, the processor is used to read the computer program in the memory and perform the following operations:

transmitting the second information to the LMF entity, in a periodic transmission manner;
or,
transmitting the second information to the LMF entity, according to high-layer signaling;
or,
transmitting the second information to the LMF entity when the base station determines that a triggering condition for correction parameter reporting is met.

In an eighth aspect, one embodiment of the present disclosure provides an information transmission device, including:

a receiving unit configured to receive first sounding reference signal (SRS) and position information of at least two first devices sent by the at least two first devices;
a processing unit configured to determine a correction parameter according to the first SRS and position information of the at least two first devices sent by the at least two first devices; wherein the correction parameter is used to correct a carrier phase measurement value;
a transmission unit configured to transmit second information to a location management function (LMF) entity; wherein the second information includes the correction parameter.

In a ninth aspect, one embodiment of the present disclosure provides carrier phase positioning device, including: a memory, a transceiver, and a processor;
wherein the memory is used to store a computer program; the transceiver is used to send and receive data under the control of the processor; the processor is used to read the computer program in the memory and perform the following operations:

receiving a correction parameter and a carrier phase measurement value of a target user equipment (UE);
performing compensation processing on the carrier phase measurement value according to the correction parameter;
performing positioning calculation processing for the target UE according to the compensated carrier phase measurement value.

Optionally, the processor is used to read the computer program in the memory and perform the following operations:

receiving first information transmitted by a first device, and receiving a carrier phase measurement value transmitted by the target UE; wherein the first information includes a correction parameter determined by the first device;
and/or,
receiving second information transmitted by a base station, and receiving a carrier phase measurement value of measuring a sounding reference signal (SRS) of the target UE, transmitted by the base station; wherein the second information includes a correction parameter determined by the base station.

Optionally, the first information further includes at least one of the following:

reliability information of the correction parameter;
base station identifier information;
transmission channel timing error group identifier (ID);
reception channel timing error group ID corresponding to the correction parameter;
reception beam identifier information corresponding to the correction parameter;
valid time range of the correction parameter; or,
reporting time stamp of the correction parameter;
and/or,
the second information further includes at least one of the following:

reliability information of the correction parameter;
reception channel timing error group ID corresponding to the correction parameter;
reception beam identifier information corresponding to the correction parameter;
valid time range of the correction parameter; or,
reporting time stamp of the correction parameter.

Optionally, the processor is used to read the computer program in the memory and perform the following operations:

determining a carrier phase measurement value of an optimal link, according to the reliability information;
performing compensation processing on the carrier phase measurement value of the optimal link according to the correction parameter.

In a tenth aspect, one embodiment of the present disclosure provides a carrier phase positioning device, including:

a first receiving unit configured to receive a correction parameter and a carrier phase measurement value of a target user equipment (UE);
a compensation unit configured to perform compensation processing on the carrier phase measurement value according to the correction parameter;
a processing unit configured to perform positioning calculation processing for the target UE according to the compensated carrier phase measurement value.

In an eleventh aspect, one embodiment of the present disclosure provides a carrier phase positioning device, including: a memory, a transceiver, and a processor;
wherein the memory is used to store a computer program; the transceiver is used to send and receive data under the control of the processor; the processor is used to read the computer program in the memory and perform the following operations:

receiving first information and PRSs transmitted by at least two second devices; wherein the first information includes a correction parameter determined by a first device;
performing carrier phase measurement based on the PRS transmitted by the at least two second devices, thereby obtaining a carrier phase measurement value;
performing compensation processing on the carrier phase measurement value according to the first information;
performing positioning calculation processing based on the compensated carrier phase measurement value.

Optionally, the processor is used to read the computer program in the memory and perform the following operations:

receiving first information transmitted by the first device;
and/or,
receiving first information transmitted by a location management function (LMF) entity.

Optionally, the first information further includes at least one of the following:

reliability information of the correction parameter;
base station identifier information;
transmission channel timing error group identifier (ID);
reception channel timing error group ID corresponding to the correction parameter;
reception beam identifier information corresponding to the correction parameter;
valid time range of the correction parameter; or,
reporting time stamp of the correction parameter.

Optionally, the processor is used to read the computer program in the memory and perform the following operations:

determining a carrier phase measurement value of an optimal link based on the reliability information;
compensating the carrier phase measurement value of the optimal link according to the correction parameter.

In a twelfth aspect, one embodiment of the present disclosure provides a carrier phase positioning device, including:

a first receiving unit configured to receive first information and PRSs transmitted by at least two second devices;
a measurement unit configured to perform carrier phase measurement based on the PRS transmitted by the at least two second devices, thereby obtaining a carrier phase measurement value;
a measurement unit configured to perform compensation processing on the carrier phase measurement value according to the first information;
a processing unit configured to perform positioning calculation processing based on the compensated carrier phase measurement value.

In a thirteenth aspect, one embodiment of the present disclosure provides a processor-readable storage medium, including a computer program stored thereon; wherein the computer program is used to cause a processor to perform the steps in the information transmission method on the first device side; or the computer program is used to cause the processor to perform the steps in the information transmission method on the base station side; or the computer program is used to cause the processor to perform the steps in the carrier phase positioning method on the LSM side; or the computer program is used to cause the processor to perform the steps in the information transmission method on the UE side.

The beneficial effects of the above technical solution in the present disclosure are as follows.

In the embodiment of the present disclosure, the correction parameter used to correct the carrier phase measurement value is determined and transmitted to the LMF entity or the target UE, so that the LMF entity or the target UE can perform, according to the correction parameter, compensation processing on a carrier phase measurement value measured by the target UE, and perform position calculation processing based on the compensated carrier phase measurement value, which can effectively eliminate positioning errors caused by timing errors, thereby improving positioning accuracy.

**BRIEF DESCRIPTION OF THE DRAWINGS**

FIG. 1 is a flow chart of an information transmission method on a first device side according to an embodiment of the present disclosure;
FIG. 2 is a flow chart of an information transmission method on a base station side according to an embodiment of the present disclosure;
FIG. 3 is a flow chart of an information transmission method on an LMF entity side according to an embodiment of the present disclosure;
FIG. 4 is a flow chart of an information transmission method on a user equipment side according to an embodiment of the present disclosure;
FIG. 5 is a block diagram of an information transmission device on a first device side according to an embodiment of the present disclosure;
FIG. 6 is a block diagram of an information transmission device according to an embodiment of the present disclosure;
FIG. 7 is a block diagram of an information transmission device on a base station side according to an embodiment of the present disclosure;
FIG. 8 is a block diagram of an information transmission device on an LMF side according to an embodiment of the present disclosure;
FIG. 9 is a block diagram of an information transmission device on a user equipment side according to an embodiment of the present disclosure; and
FIG. 10 is a block diagram of a carrier phase positioning device according to an embodiment of the present disclosure.

**DETAILED DESCRIPTION**

In order to make the technical problems to be solved, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. Thus, persons having ordinary skill in the art should understand that, various changes and modifications may be made to the embodiments described here, without departing from scope and spirit of the present disclosure. In addition, for clarity and simplicity, descriptions about known functions and constructions are omitted.

It is to be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it is to be understood that, the sequence numbers of the following processes do not imply the order of execution. The order of execution of each process should be determined by its function and internal logic, which should not constitute any limitation to the implementation processes of the embodiments of the application.

The terms "system" and "network" are often used interchangeably in the present disclosure.

The technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS).

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The following is an introduction to the principle of estimating timing errors between base stations through 5G carrier phase measurement:

It is assumed that base stations i and j are signal transmitters, and their coordinates are $(x^{(i)}, y^{(i)}, z^{(i)})$ and $(x^{(j)}, y^{(j)}, z^{(j)})$ respectively; PRU l is a signal receiver, and its coordinates are $(x_l, y_l, z_l)$; then a distance $d_l^i$ between the PRU and the base station is:

$$d_l^i = \sqrt{(x^{(i)} - x_l)^2 + (y^{(i)} - y_l)^2 + (z^{(i)} - z_l)^2} \qquad (1)$$

When only considering line of sight (LOS) and the presence of timing deviation and frequency deviation, a carrier phase measurement value can be expressed as the formula:

$$\lambda \varphi_l^i(t) = d_l^i(t) + c\left(\delta t^i(t) - \delta t_l(t)\right) + \lambda\left(\varphi^i(0) - \varphi_l(0) - N_l^i\right) \qquad (2)$$

where c is the speed of light; $\delta t^i(t)$ is timing errors on a transmitter i; $\delta t_l(t)$ is time deviation on a receiver l; $\lambda$ is a carrier wavelength; $\phi^i$ is an initial phase of the transmitter i; $\phi_l$ is an initial phase of the receiver l; $N_l^i$ is an unknown whole cycle ambiguity, and carrier phase measurement noise is ignored here. Further, a transmitter j can be introduced to form phase difference of arrival (PDOA) equation, which can be expressed as:

$$\lambda \varphi_l^{ij}(t) = d_l^{ij}(t) + c\delta t^{ij}(t) + \lambda\left(\varphi^{ij}(0) - N_l^{ij}\right) \qquad (3)$$

where $\varphi_l^{ij}(t)$ represents a difference in carrier phases of transmitted signals from the transmitter i and transmitter j, received and measured by the receiver l; $d_l^{ij}(t)$ represents a difference in theoretical distance from the transmitters i and j to the receiver l, $\delta t^{ij}(t)$ represents a difference between timing errors of the transmitter i and transmitter j; $\varphi^{ij}$ represents a difference between initial phases of the transmitter i and transmitter j; $N_l^{ij}$ represents a difference between whole cycle ambiguities of signals transmitted by the transmitter i and transmitter j, measured by the receiver l. Comparing formulas (2) and (3), it can be seen that single differential operation can eliminate common errors on the receiver l, such as time deviation $\delta t_l(t)$, initial phase noise $\phi_{l'}$ and thus, the timing errors between base stations can be expressed as:

$$\delta t^{ij}(t) = [\lambda \varphi_l^{ij}(t) - d_l^{ij}(t) - \lambda(\varphi^{ij}(0) - N_l^{ij})]/c \qquad (4)$$

Since position coordinates of the base station and reference UE are known, a geometric distance difference $d_l^{ij}$ between the base station and the reference UE can be accurately calculated. After the PRU carrier phase-locked loop is locked to a certain base station, ( $\phi^{ij}(0) - N_l^{ij}$ ) should be a constant. Therefore, the timing errors between base stations can be further expressed as:

$$\delta t^{ij}(t) = \delta t^{ij}(t) = [\lambda \varphi_l^{ij}(t) - d_l^{ij}(t)]/c \qquad (5)$$

Considering different effects of Tx TEG identity document (ID) and Rx TEG ID, the above formula (2) can be further expressed as:

$$\lambda \varphi_{l,RxTEG\,m}^{i,Tx\,TEG\,n}(t) = d_{l,Rx\,TEG\,m}^{i,Tx\,TEG\,n}(t) + c\left(\delta t^{i,TxTEG\,n}(t) - \right.$$

$$\delta t_{l,Rx\,TEG\,m}(t)\right) + \lambda\left(\varphi^{i,TxTEG\,n}(0) - \varphi_{l,RxTEG\,m}(0) - \right.$$

$$\left. N_{l,RxTEG\,m}^{i,TxTEG\,n}\right) \qquad (6)$$

It can be used to calibrate differences between different TEGs of different base stations and the same base station.

Embodiments of the present disclosure provide an information transmission method, a carrier phase positioning method and device, which can solve the problem of poor positioning accuracy in carrier phase positioning technology based on OFDM signals.

The method and the device are based on the same application concept. Since the method and the device solve the problem in a similar principle, implementation of the method and device can refer to each other, and the repeated parts will not be repeated.

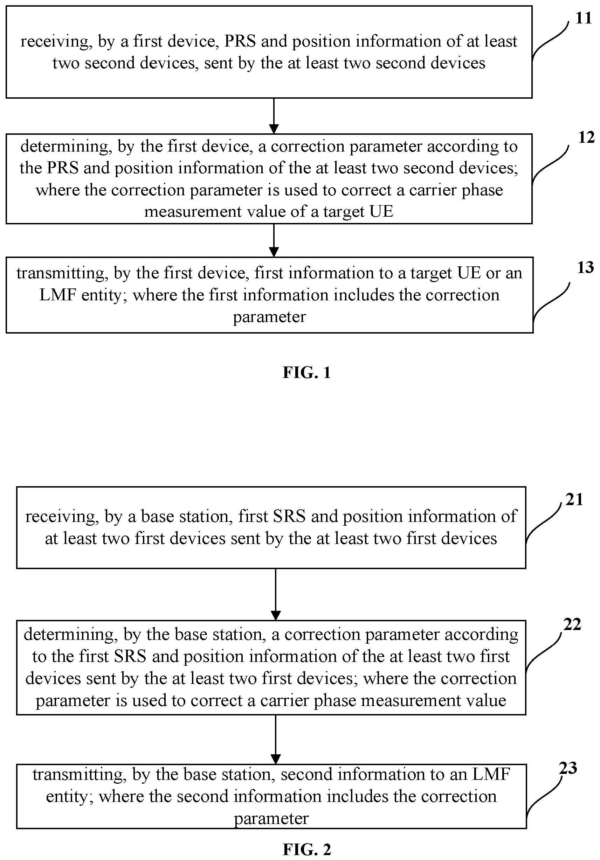

As shown in FIG. 1, one embodiment of the present disclosure provides an information transmission method, including the following steps.

Step 11: receiving, by a first device, PRS and position information of at least two second devices, sent by the at least two second devices.

Optionally, the first device is a reference device whose position is known in advance or whose position can be accurately measured. The first device may be referred as a positioning reference unit (PRU), and its type may be a reference UE or a reference base station, etc.

Optionally, the second device may be a base station or a road side unit (RSU). The position information can be understood as information used to characterize the position of the second device, which can be represented by position coordinates, or can also be represented in other forms, etc., which are not limited to this in the embodiments of the present disclosure.

Step 12: determining, by the first device, a correction parameter according to the PRS and position information of the at least two second devices; where the correction parameter is used to correct a carrier phase measurement value of a target UE.

Optionally, the first device may determine, based on the PRS of the second devices and the position information, a carrier phase difference of the PRS of at least two second devices received by the first device, and determine a correction parameter based on the carrier phase difference and the position information; or, the first device can determine the correction parameter based on a difference between timing errors corresponding to different second devices, which are not limited to this in the embodiment of the present disclosure.

Step 13: transmitting, by the first device, first information to a target UE or an LMF entity; where the first information includes the correction parameter.

Optionally, the first device transmits the correction parameter to the LMF entity; and the LMF entity can perform, according to the correction parameter, compensation processing on the carrier phase measurement value measured by the target UE, and perform position calculation processing based on the compensated carrier phase measurement value.

Optionally, the first device transmits the correction parameter to the LMF entity, and the LMF entity can forward the correction parameter to the target UE; and the target UE can perform, according to the correction parameter, compensation processing on a measured carrier phase measurement value, and perform position calculation processing based on the compensated carrier phase measurement value.

Optionally, the first device transmits the correction parameter to the target UE; and the target UE can perform, according to the correction parameter, compensation processing on a measured carrier phase measurement value, and perform position calculation processing based on the compensated carrier phase measurement value.

In the above solution, the first device (such as PRU) determines the correction parameter used to correct the carrier phase measurement value, and transmits the correction parameter to the LMF entity or the target UE, so that the LMF entity or the target UE can perform, according to the correction parameter, compensation processing on a carrier phase measurement value measured by the target UE, and perform position calculation processing based on the compensated carrier phase measurement value, which can effectively eliminate positioning errors caused by timing errors, thereby improving positioning accuracy.

Optionally, the first information further includes at least one of the following:

reliability information of the correction parameter;
base station identifier information;
transmission channel timing error group ID;
reception channel timing error group ID corresponding to the correction parameter;
reception beam identifier information corresponding to the correction parameter;
valid time range of the correction parameter; or,
reporting time stamp of the correction parameter.

Optionally, the reliability information can be used to determine link performance. For example, based on the reliability information, the LMF side can select a valid correction parameter, a valid first device, etc. Optionally, the reliability information can be used to indicate whether the correction parameter comes from LoS path, and/or to indicate weights of multiple correction parameters, etc., which is limited to this in the embodiment of the present disclosure.

Optionally, the reliability information includes but is not limited to at least one of the following: signal-to-noise ratio (SNR), signal-to-noise and interference ratio (SINR), downlink-positioning reference signal (DL-PRS), reference signal received power (RSRP), carrier noise ratio (CNR), variance of carrier phase measurement value, measurement error average value, indication information used to indicate line of sight or non-line of sight (i.e., indication of channel that can be seen in a straight line (line of sight, LoS)/channel that cannot be seen in a straight line (non line of sight, NLoS)), angle stability, etc.

The base station identifier information may be a base station ID or a transmit receive point ID (TRP ID). The base station identifier information and the transmission channel Tx timing error group ID (Tx TEG ID) can be used for averaging on different PRUs based on the same TRP ID and Tx TEG ID association.

The reception channel Rx timing error group ID (Rx TEG ID) corresponding to the correction parameter and the reception beam identifier information corresponding to the correction parameter can indicate relationship between a timing error correction parameter and Rx TEG as well as reception beams, which is used for performing average processing on the timing error correction parameters of the PRU at different moments.

The valid time range of the correction parameter is used to indicate a time range in which the correction parameter is valid. The reporting time stamp of the correction parameter is used to indicate reporting time of the correction parameter.

Optionally, the determining, by the first device, a correction parameter according to the PRS and position information of the at least two second devices, includes:

determining, by the first device, a distance difference between the at least two second devices and the first device, according to the position information of at least two second devices and position information of the first device;

according to PRS of the at least two second devices, determining, by the first device, a carrier phase difference for receiving the PRS of the at least two second devices;

determining, by the first device, a timing error correction parameter according to the distance difference and the carrier phase difference, and determining the timing error correction parameter as the correction parameter; where the timing error correction parameter is used to correct a carrier phase measurement value.

Specifically, taking the at least two second devices including a base station i and a base station j as an example, a timing error correction parameter between the base station i and the base station j is recorded as $\lambda \phi_{corr}^{ij,Tx\,TEGi,j}$, and a time change rate of the timing error correction parameter is recorded as $\lambda \dot{\phi}_{corr}^{ij,Tx\,TEGi,j}$. corr

When the position information of the base station and the first device is expressed in three-dimensional coordinates, the distance difference can be further obtained based on the above distance formula (1) between the first device and the base station.

Further, the carrier phase difference $\lambda \phi_{l,Rx\,TEGi,j}^{ij,Tx\,TEGi,j}(t_1)$ considering influence of Tx TEG and Rx TEG can be determined based on the expression (3). The timing error correction parameter determined according to the distance difference and the carrier phase difference is $\lambda \phi_{corr}^{ij,Tx\,TEGi,j}$ which can be expressed as follows:

$$\lambda\varphi_{corr}^{ij,Tx\,TEGi,j}(t_1) = d_{l,Rx\,TEGi,j}^{ij,Tx\,TEGi,j} - \lambda\varphi_{l,Rx\,TEGi,j}^{ij,Tx\,TEGi,j}(t_1) =$$

$$-c\delta t^{ij,Tx\,TEGi,j}(t_1) - \lambda\left(\varphi^{ij,Tx\,TEGi,j}(0) - N_{l,Rx\,TEGi,j}^{ij,Tx\,TEGi,j}\right) \quad (7)$$

Optionally, the whole cycle ambiguity $N_{l,Rx\,TEGi,j}^{ij,Tx\,TEGi,j}$ can be calculated in real time based on the Chinese cosine theorem; or after the carrier phase-locked loop of the first device is locked to a certain base station, ( $\dot{\phi}^{ij,Tx\,TEGi,j}(0) - N_{l,Rx\,TEGi,j}^{ij,Tx\,TEGi,j}$ ) should be a constant, then the carrier phase correction parameter reported by the first device can be expressed as:

$$\lambda\varphi_{corr}^{ij,Tx\,TEGi,j}(t_1) = d_{l,Rx\,TEGi,j}^{ij,Tx\,TEGi,j} - \lambda\varphi_{l,Rx\,TEGi,j}^{ij,Tx\,TEGi,j}(t_1) =$$

$$-c\delta t^{ij,Tx\,TEGi,j}(t_1) \quad (8)$$

In this way, the step of the first device determining the timing error correction parameter according to the distance difference and the carrier phase difference, may include:
determining the timing error correction parameter with the following formula (9):

$$\lambda\varphi_{corr}^{ij,Tx\,TEGi,j}(t_1) = d_{l,Rx\,TEGi,j}^{ij,Tx\,TEGi,j} - \lambda\varphi_{l,Rx\,TEGi,j}^{ij,Tx\,TEGi,j}(t_1) \quad (9)$$

Where $\lambda\varphi_{corr}^{ij,Tx\,TEGi,j}(t_1)$ is the timing error correction parameter; $d_{l,Rx\,TEGi,j}^{ij,Tx\,TEGi,j}$ the distance difference; $\varphi_{l,Rx\,TEGi,j}^{ij,Tx\,TEGi,j}(t_1)$ is the carrier phase difference; and $\lambda$ is a carrier wavelength.

Optionally, the determining, by the first device, a correction parameter according to the PRS and position information of the at least two second devices, includes:

determining, by the first device, a timing error correction parameter at a first moment according to PRS and position information of the at least two second devices at the first moment;

determining, by the first device, a timing error correction parameter at a second moment according to PRS and position information of the at least two second devices at the second moment;

determining, by the first device, a timing error correction parameter change rate according to the timing error correction parameter at the first moment and the timing error correction parameter at the second moment, and determining the timing error correction parameter and the timing error correction parameter change rate as the correction parameter.

Specifically, according to the above expression of the timing error correction parameter $\lambda \phi_{corr}^{ij,Tx\ TEGi,j}$, the timing error correction parameter corr $\lambda \phi_{corr}^{ij,Tx\ TEGi,j}(t_0)$ at the first moment and the timing error correction parameter $\lambda\varphi_{corr}^{ij,Tx\ TEGi,j}(t_1)$ at the second moment can be calculated respectively.

Optionally, the step of determining, by the first device, a timing error correction parameter change rate according to the timing error correction parameter at the first moment and the timing error correction parameter at the second moment, may include:

determining the timing error correction parameter change rate through the following formula (10):

$$\lambda\dot{\varphi}_{corr}^{ij,Tx\ TEGi,j} = \frac{\lambda\varphi_{corr}^{ij,Tx\ TEGi,j}(t_1)-\lambda\varphi_{corr}^{ij,Tx\ TEGi,j}(t_0)}{t_1-t_0} \qquad (10)$$

where $\lambda\dot{\varphi}_{corr}^{ij,Tx\ TEGi,j}$ is the timing error correction parameter change rate; $\lambda\varphi_{corr}^{ij,Tx\ TEGi,j}(t_0)$ is the timing error correction parameter at the first moment; $\lambda\varphi_{corr}^{ij,Tx\ TEGi,j}(t_1)$ is the timing error correction parameter at the second moment; $t_0$ is the first moment; and $t_1$ is the second moment.

Optionally, the transmitting, by the first device, first information to a target UE or an LMF entity, includes:

transmitting, by the first device, one correction parameter to the target UE or the LMF entity; where the correction parameter includes: the timing error correction parameter used to correct the carrier phase measurement value, or the correction parameter includes: the timing error correction parameter and the timing error correction parameter change rate;
or,
transmitting, by the first device, a correction parameter corresponding to each moment to the target UE or the LMF entity at N moments, respectively; where the correction parameter includes: the timing error correction parameter and the timing error correction parameter change rate.

Optionally, when the first device transmits the correction parameter to the target UE or the LMF entity, corresponding reliability information may be transmitted together. For example, the first device transmitting one correction parameter and reliability information to the target UE or the LMF entity can be understood as that the first device transmits a set of parameters to the target UE or the LMF entity, where the set of parameters may include a correction parameter at a certain moment of the first device and corresponding reliability information.

For example, the correction parameter includes: a timing error correction parameter used to correct a carrier phase measurement value, or the correction parameter includes: a timing error correction parameter and a time change rate of the timing error correction parameter. That is, at a certain moment, one first device can transmit a set of parameters to the target UE or the LMF entity, and the set of parameters includes: a timing error correction parameter and corresponding reliability information. Alternatively, at a certain moment, one first device can transmit a set of parameters to the target UE or the LMF entity, and the set of parameters includes: a timing error correction parameter, a time variation of the timing error correction parameter, and the corresponding reliability information. In this way, one first device can also transmit a set of parameters to the target UE or the LMF entity at each moment of the N moments, and the set of parameters may include a timing error correction parameter, a time change rate of the timing error correction parameter, and corresponding reliability parameters.

Correspondingly, for the target UE or LMF entity side, it can also receive, at the same moment, a set of parameters respectively sent by N first devices. The set of parameters may include: a timing error correction parameter and corresponding reliability information. Alternatively, the set of parameters may also include: a timing error correction parameter, a time variation of the timing error correction parameter, and corresponding reliability information.

Optionally, the transmitting, by the first device, first information to a target UE or an LMF entity, includes:

transmitting, by the first device, the first information to the target UE or the LMF entity, in a periodic transmission manner;
or,
transmitting, by the first device, the first information to the target UE or the LMF entity, according to high-layer signaling;
or,
transmitting the first information to the target UE or the LMF entity when the first device determines that a triggering condition for correction parameter reporting is met.

Optionally, the triggering condition for the correction parameter reporting may include: a parameter value of the reliability information reaches a first threshold, or other conditions, etc., and the embodiment of the present disclosure is not limited to this. For example, the parameter value of the reliability information may be a parameter value of RSRP/SNR/SINR, etc., and the first threshold may be notified by the network device.

In the above solution, a differential system is built based on the reference device (PRU) with a known position, and the carrier phase differential correction parameter is calculated and is used to compensate for the carrier phase measurement value of the target UE, which can effectively eliminate positioning errors caused by timing errors and improve positioning accuracy. Further, the manner of reporting the correction parameter and reliability information based on a period, high-level signaling trigger, or autonomous triggering by the first device, can effectively reduce the amount of information reported.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

As shown in FIG. 2, one embodiment of the present disclosure provides an information transmission method, including the following steps:
Step 21: receiving, by a base station, first SRS and position information of at least two first devices sent by the at least two first devices.

Optionally, the first device is a reference device whose position is known in advance or whose position can be accurately measured. The first device may be referred as a positioning reference unit (PRU), and its type may be a reference UE or a reference base station, etc.

Step 22: determining, by the base station, a correction parameter according to the first SRS and position information of the at least two first devices sent by the at least two first devices; where the correction parameter is used to correct a carrier phase measurement value.

Optionally, the base station may determine, based on the first SRS of and the position information of the first devices, a carrier phase difference of the first SRS received by the base station from the at least two first devices, and determine the correction parameter according to the carrier phase difference and the position information; or, the base station can determine the correction parameter based on a difference between timing errors corresponding to different first devices, which are not limited to this in the embodiment of the present disclosure.

Step 23: transmitting, by the base station, second information to an LMF entity; where the second information includes the correction parameter.

Optionally, the first device transmits the correction parameter to the LMF entity; and the LMF entity can perform, according to the correction parameter, compensation processing on the carrier phase measurement value of the target UE, and perform position calculation processing based on the compensated carrier phase measurement value.

The carrier phase measurement value of the target UE may be a carrier phase measurement value obtained by the base station measuring a second SRS of the target UE. Then, the information transmission method may further include the following steps:

receiving, by the base station, a second SRS sent by the target UE;
performing, by the base station, carrier phase measurement according to the second SRS to obtain a carrier phase measurement value;
transmitting, by the base station, the carrier phase measurement value to the LMF entity.

In this embodiment, the base station may determine the correction parameter used to correct the carrier phase measurement value, and transmit the correction parameter to the LMF entity. After the base station measures the second SRS of the target UE to obtain the carrier phase measurement value and transmits the carrier phase measurement value to the LMF entity, the LMF entity can perform compensation processing on a carrier phase measurement value according to the correction parameter, and perform position calculation processing based on the compensated carrier phase measurement value, which can effectively eliminate positioning errors caused by timing errors, thereby improving positioning accuracy.

Optionally, the second information further includes at least one of the following:

reliability information of the correction parameter;
reception channel timing error group ID corresponding to the correction parameter;
reception beam identifier information corresponding to the correction parameter;
valid time range of the correction parameter; or,
reporting time stamp of the correction parameter.

Optionally, the reliability information can be used to determine link performance. For example, based on the reliability information, the LMF side can select a valid correction parameter, a valid first device, etc. Optionally, the reliability information can be used to indicate whether the correction parameter comes from LoS path, and/or to indicate weights of multiple correction parameters, etc., which is limited to this in the embodiment of the present disclosure.

Optionally, the reliability information includes but is not limited to at least one of the following: signal-to-noise ratio (SNR), signal-to-noise and interference ratio (SINR), downlink-positioning reference signal (DL-PRS), reference signal received power (RSRP), carrier noise ratio (CNR), variance of carrier phase measurement value, measurement error average value, indication information used to indicate line of sight or non-line of sight (i.e., LoS/NLoS), angle stability, etc.

The receiving channel Rx timing error group ID (Rx TEG ID) corresponding to the correction parameter and the receiving beam identifier information corresponding to the correction parameter can indicate relationship between a timing error correction parameter and Rx TEG as well as receiving beams.

The valid time range of the correction parameter is used to indicate a time range in which the correction parameter is valid. The reporting time stamp of the correction parameter is used to indicate reporting time of the correction parameter.

Optionally, the determining, by the base station, a correction parameter according to the first SRS and position information of the at least two first devices sent by the at least two first devices, includes:

determining, by the base station, a distance difference between the at least two first devices and the base station according to the position information of the at least two first devices and the position information of the base station;
determining, by the base station, a carrier phase difference for receiving the SRS of the at least two first devices based on the first SRS of the at least two first devices;
determining, by the base station, a timing error correction parameter according to the distance difference and the carrier phase difference, and determining the timing error correction parameter as the correction parameter.

Specifically, taking the at least two second devices including a base station i and a base station j as an example, a timing error correction parameter between the base station i and the base station j is recorded as $\lambda \phi_{corr}^{ij,Tx\ TEGi,j}$, and a time change rate of the timing error correction parameter is recorded as $\lambda \dot{\phi}_{corr}^{ij,Tx\ TEGi,j}$.

When the position information of the base station and the first device is expressed in three-dimensional coordinates, the distance difference can be further obtained based on the above distance formula (1) between the first device and the base station.

Further, the carrier phase difference $\lambda \phi_{l,Rx\ TEGi,j}^{ij,Tx\ TEGi,j}(t_1)$ considering influence of Tx TEG and Rx TEG can be determined based on the expression (3). The timing error correction parameter determined according to the distance difference and the carrier phase difference is $\lambda \phi_{corr}^{ij,Tx\ TEGi,j}$ which can be expressed as follows:

$$\lambda\varphi_{corr}^{ij,Tx\ TEGi,j}(t_1) = d_{l,Rx\ TEGi,j}^{ij,Tx\ TEGi,j} - \lambda\varphi_{l,Rx\ TEGi,j}^{ij,Tx\ TEGi,j}(t_1) =$$

$$-c\delta t^{ij,Tx\ TEGi,j}(t_1) - \lambda\left(\varphi^{ij,Tx\ TEGi,j}(0) - N_{l,Rx\ TEGi,j}^{ij,Tx\ TEGi,j}\right) \quad (7)$$

Optionally, the whole cycle ambiguity $N_{l,Rx\ TEGi,j}^{ij,Tx\ TEGi,j}$ can be calculated in real time based on the Chinese cosine theorem; or after the carrier phase-locked loop of the first device is locked to a certain base station, ( $\phi^{ij,Tx\ TEGi,j}(0) - N_{l,Rx\ TEGi,j}^{ij,Tx\ TEGi,j}$ ) should be a constant, then the carrier phase correction parameter reported byPRU can be expressed as:

$$\lambda\varphi_{corr}^{ij,Tx\ TEGi,j}(t_1) = d_{l,Rx\ TEGi,j}^{ij,Tx\ TEGi,j} - \lambda\varphi_{l,Rx\ TEGi,j}^{ij,Tx\ TEGi,j}(t_1) =$$

$$-c\delta t^{ij,Tx\ TEGi,j}(t_1) \quad (8)$$

In this way, the step of the base station determining the timing error correction parameter according to the distance difference and the carrier phase difference, may include:
determining the timing error correction parameter with the following formula (9):

$$\lambda\varphi_{corr}^{ij,Tx\ TEGi,j}(t_1) = d_{l,Rx\ TEGi,j}^{ij,Tx\ TEGi,j} - \lambda\varphi_{l,Rx\ TEGi,j}^{ij,Tx\ TEGi,j}(t_1) \quad (9)$$

Where $\lambda\varphi_{corr}^{ij,Tx\ TEGi,j}(t_1)$ is the timing error correction parameter; $d_{l,Rx\ TEGi,j}^{ij,Tx\ TEGi,j}$ is the distance difference; $\varphi_{l,Rx\ TEGi,j}^{ij,Tx\ TEGi,j}(t_1)$ is the carrier phase difference; and $\lambda$ is a carrier wavelength.

Optionally, the determining, by the base station, a correction parameter according to the first SRS and position information of the at least two first devices sent by the at least two first devices, including:

determining, by the base station, a timing error correction parameter at a first moment according to first SRS and position information of at least two first devices at the first moment;
determining, by the base station, a timing error correction parameter at a second moment according to first SRS and position information of at least two first devices at the second moment;
determining, by the base station, a timing error correction parameter change rate according to the timing error correction parameter at the first moment and the timing error correction parameter at the second moment, and determining the timing error correction parameter and the timing error correction parameter change rate as the correction parameter.

Specifically, according to the above expression of the timing error correction parameter $\lambda \phi_{corr}^{ij,Tx\ TEGi,j}$, the timing error correction parameter $\lambda \phi_{corr}^{ij,Tx\ TEGi,j}(t_0)$ at the first moment and the timing error correction parameter

$$\lambda \varphi_{\text{corr}}^{ij,\text{Tx TEGi,j}}(t_1)$$ at the second moment can be calculated respectively.

Optionally, the step of determining, by the first device, a timing error correction parameter change rate according to the timing error correction parameter at the first moment and the timing error correction parameter at the second moment, may include:

determining the timing error correction parameter change rate through the following formula (10):

$$\lambda \dot{\varphi}_{corr}^{ij,Tx\,TEGi,j} = \frac{\lambda \varphi_{corr}^{ij,Tx\,TEGi,j}(t_1) - \lambda \varphi_{corr}^{ij,Tx\,TEGi,j}(t_0)}{t_1 - t_0} \qquad (10)$$

where $\lambda \dot{\varphi}_{\text{corr}}^{ij,\text{Tx TEGi,j}}$ is the timing error correction parameter change rate; $\lambda \varphi_{\text{corr}}^{ij,\text{Tx TEGi,j}}(t_0)$ is the timing error correction parameter at the first moment; $\lambda \varphi_{\text{corr}}^{ij,\text{Tx TEGi,j}}(t_1)$ is the timing error correction parameter at the second moment; $t_0$ is the first moment; and $t_1$ is the second moment.

Optionally, the transmitting, by the base station, second information to an LMF entity, includes:

transmitting, by the base station, one correction parameter to the LMF entity; where the correction parameter includes: a timing error correction parameter used to correct a carrier phase measurement value, or the correction parameter includes: the timing error correction parameter and the timing error correction parameter change rate;
or,
transmitting, by the base station, one correction parameter corresponding to each moment to the LMF entity at N moments, respectively; where the correction parameter includes: the timing error correction parameter and the timing error correction parameter change rate, where N is an integer greater than 1.

Optionally, when the first device transmits the correction parameter to the target UE or the LMF entity, corresponding reliability information may be transmitted together. For example, the base station transmitting one correction parameter and reliability information to the LMF entity can be understood as that the base station transmits a set of parameters to the LMF entity, where the set of parameters may include a correction parameter at a certain moment of the base station and corresponding reliability information.

For example, the correction parameter includes: a timing error correction parameter used to correct a carrier phase measurement value, or the correction parameter includes: a timing error correction parameter and a time change rate of the timing error correction parameter. That is, at a certain moment, one base station can transmit a set of parameters to the LMF entity, and the set of parameters includes: a timing error correction parameter and corresponding reliability information. Alternatively, at a certain moment, one base station can transmit a set of parameters to the LMF entity, and the set of parameters includes: a timing error correction parameter, a time variation of the timing error correction parameter, and the corresponding reliability information. In this way, one base station can also transmit a set of parameters to the LMF entity at each moment of the N moments, and the set of parameters may include a timing error correction parameter, a time change rate of the timing error correction parameter, and corresponding reliability parameters.

Correspondingly, for the LMF entity side, it can also receive, at the same moment, a set of parameters respectively sent by N base stations. The set of parameters may include: a timing error correction parameter and corresponding reliability information. Alternatively, the set of parameters may also include: a timing error correction parameter, a time variation of the timing error correction parameter, and corresponding reliability information.

Optionally, the transmitting, by the base station, second information to an LMF entity, includes:

transmitting, by the base station, the second information to the LMF entity, in a periodic transmission manner;
or,
transmitting, by the base station, the second information to the LMF entity, according to high-layer signaling;
or,
transmitting the second information to the LMF entity when the base station determines that a triggering condition for correction parameter reporting is met.

Optionally, the triggering condition for the correction parameter reporting may include: a parameter value of the reliability information reaches a first threshold.

Optionally, the triggering condition for the correction parameter reporting may include: a parameter value of the reliability information reaches a first threshold, or other conditions, etc., and the embodiment of the present disclosure is not limited to this. For example, the parameter value of the reliability information may be a parameter value of RSRP/SNR/SINR, etc., and the first threshold may be notified by the network device.

In the above solution, during uplink process, the base station calculates the carrier phase differential correction parameter used to compensate for the carrier phase measurement value of the target UE, which can effectively eliminate positioning errors caused by timing errors and improve positioning accuracy. Further, the manner of reporting the correction parameter and reliability information based on a period, high-level signaling trigger, or autonomous triggering by the base station, can effectively reduce the amount of information reported.

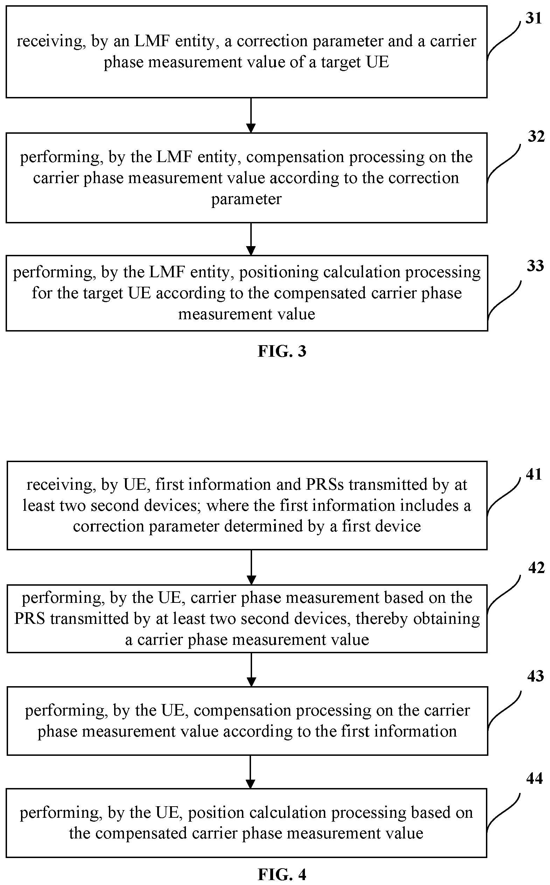

As shown in FIG. 3, one embodiment of the present disclosure provides a carrier phase positioning method, which includes the following steps:

Step 31: receiving, by an LMF entity, a correction parameter and a carrier phase measurement value of a target UE.

Optionally, the carrier phase measurement value of the target UE may be a carrier phase measurement value obtained by the target UE via measurement, or may be a carrier phase measurement value obtained by the base station measuring a SRS of the target UE. Then, the step of receiving, by an LMF entity, a correction parameter and a carrier phase measurement value of a target UE, may include:

receiving, by the LMF entity, first information transmitted by a first device, and receiving a carrier phase measurement value transmitted by the target UE; where the first information includes a correction parameter determined by the first device;

and/or,

receiving, by the LMF entity, second information transmitted by a base station, and receiving a carrier phase measurement value of measuring a sounding reference signal (SRS) of the target UE, transmitted by the base station; where the second information includes a correction parameter determined by the base station.

The first device is a reference device whose position is known in advance or whose position can be accurately measured. The first device may be referred as a positioning reference unit (PRU), and its type may be a reference UE or a reference base station, etc.

Step 32: performing, by the LMF entity, compensation processing on the carrier phase measurement value according to the correction parameter.

Optionally, in downlink process, when the LMF entity receives the correction parameter transmitted by the first device and the carrier phase measurement value transmitted by the target UE, the LMF entity may perform compensation processing on the carrier phase measurement value obtained by the target UE via measurement.

Alternatively, when the LMF entity receives the correction parameter transmitted by the first device, the LMF entity may also forward the correction parameter to the target UE, so that the target UE performs compensation processing on the carrier phase measurement value obtained by the target UE via measurement, and then performs position calculation processing based on the compensated carrier phase measurement value, which can effectively eliminate positioning errors caused by timing errors, thereby improving positioning accuracy.

Optionally, in the uplink process, the LMF entity may receive the correction parameter transmitted by the base station and the carrier phase measurement value of measuring the SRS of the target UE by the base station, the LMF entity performs compensation processing on the carrier phase measurement value of the target UE obtained by the base station via measurement, according to the correction parameter.

Step 33: performing, by the LMF entity, positioning calculation processing for the target UE according to the compensated carrier phase measurement value.

In the above solution, the PRU or base station determines the correction parameter used to correct the carrier phase measurement value, and transmits the correction parameter to the LMF entity, so that the LMF entity can perform, according to the correction parameter, compensation processing on a carrier phase measurement value measured by the target UE, and perform position calculation processing based on the compensated carrier phase measurement value, which can effectively eliminate positioning errors caused by timing errors, thereby improving positioning accuracy. Or, the LMF entity can forward the correction parameter to the target UE so that the target UE can perform, according to the correction parameter, compensation processing on the carrier phase measurement value obtained via measurement, and perform position calculation processing based on the compensated carrier phase measurement value, which can effectively eliminate positioning errors caused by timing errors, thereby improving positioning accuracy.

Optionally, the first information further includes at least one of the following:

reliability information of the correction parameter;
base station identifier information;
transmission channel timing error group ID;

reception channel timing error group ID corresponding to the correction parameter;

reception beam identifier information corresponding to the correction parameter;

valid time range of the correction parameter; or,

reporting time stamp of the correction parameter;

and/or,

the second information further includes at least one of the following:

reliability information of the correction parameter;

reception channel timing error group ID corresponding to the correction parameter;

reception beam identifier information corresponding to the correction parameter;

valid time range of the correction parameter; or,

reporting time stamp of the correction parameter.

Optionally, the reliability information can be used to determine link performance. For example, based on the reliability information, the LMF side can select a valid correction parameter, a valid first device, etc. Optionally, the reliability information can be used to indicate whether the correction parameter comes from LoS path, and/or to indicate weights of multiple correction parameters, etc., which is limited to this in the embodiment of the present disclosure.

Optionally, the reliability information includes but is not limited to at least one of the following: signal-to-noise ratio (SNR), signal-to-noise and interference ratio (SINR), downlink-positioning reference signal (DL-PRS), reference signal received power (RSRP), carrier noise ratio (CNR), variance of carrier phase measurement value, measurement error average value, indication information used to indicate line of sight or non-line of sight (i.e., LoS/NLoS), angle stability, etc.

For example, the first device may receive the PRS and the position information of the base station transmitted by the base station, and determine the correction parameter based on the PRS and the position information of the base station. The parameters reported by the first device to the LMF entity may include at least one of the following: correction parameter, reliability information, base station identifier information, transmission channel Rx timing error group ID, reception channel Rx timing error group ID corresponding to the correction parameter, reception beam identifier information corresponding to the correction parameter, valid time range of correction parameter, and reporting time stamp of correction parameter.

For another example, the first device may receive the PRS and the position information of the RSU transmitted by the RSU, and determine the correction parameter based on the PRS and the position information of the RSU. The parameters reported by the first device to the LMF entity may include at least one of the following: correction parameter, reliability information, reception channel Rx timing error group ID corresponding to the correction parameter, reception beam identifier information corresponding to the correction parameter, valid time range of correction parameter and the reporting timestamp of correction parameter.

The base station identifier information may be a base station ID or a TRP ID. The LMF entity can perform averaging for different first devices, based on the same TRP ID and Tx TEG ID association according to the base station identifier information and Tx TEG ID.

The Rx TEG **ID** corresponding to the correction parameter and the reception beam identifier information corresponding to the correction parameter can indicate relationship between a timing error correction parameter and Rx TEG as well as reception beams. The LMF entity can perform average processing on the timing error correction parameters of the first device at different moments, according to Rx TEG ID corresponding to the correction parameter and the reception beam identifier information corresponding to the correction parameter.

The valid time range of the correction parameter is used to indicate a time range in which the correction parameter is valid. The reporting time stamp of the correction parameter is used to indicate reporting time of the correction parameter. The LMF entity can select the corresponding correction parameter for compensation processing based on the reporting time and valid time range of the correction parameter.

Optionally, the performing, by the LMF entity, compensation processing on the carrier phase measurement value according to the correction parameter, includes:

determining, by the LMF entity, a carrier phase measurement value of an optimal link, according to the reliability information;

performing, by the LMF entity, compensation processing on the carrier phase measurement value of the optimal link according to the correction parameter.

For example, the LMF entity can determine performance of the link based on reliability information such as SNR/DL-PRS/RSRP, and preferably selects a link with good positioning performance for positioning calculation. It is to be noted that the optimal link here is not limited to one, but can be multiple. For example, the carrier phase measurement values of four optimal links can be selected for positioning calculation processing.

Optionally, the correction parameter includes: a timing error correction parameter used to correct the carrier phase measurement value.

The performing, by the LMF entity, compensation processing on the carrier phase measurement value of the optimal link according to the correction parameter, includes:

determining, by the LMF entity, a sum of the carrier phase measurement value of the optimal link and the timing error correction parameter as the compensated carrier phase measurement value.

For example, a PRU or base station reports correction parameter, and its correction parameter is a timing error correction parameter $\lambda\varphi_{corr}^{ij,Tx\,TEGi,j}$ used to correct the carrier phase measurement value. If a carrier phase measurement value of a certain target UE $u$ for base stations $i, j$ is $\lambda\varphi_{u}^{ij,Tx\,TEGi,j}$, then, in order to eliminate or reduce the measurement error in $\lambda\phi_{u}^{ij,Tx\,TEGi,j}$, the receiver of the target UE u can add the received timing error correction parameter $\lambda\phi_{corr}^{ij,Tx\,TEGi,j}$ to the carrier phase measurement value $\lambda\phi_{u}^{ij,Tx\,TEGi,j}$, and the compensated carrier phase value is $\lambda\phi_{u,c}^{ij,Tx\,TEGi,j}$, that is:

$$\lambda\phi_{u,c}^{ij,Tx\,TEGi,j} = \lambda\phi_{u}^{ij,Tx\,TEGi,j} + \lambda\phi_{corr}^{ij,Tx\,TEGi,j} \qquad (11)$$

In this way, the LMF entity performs positioning calculation processing based on the compensated carrier phase value, which can effectively eliminate positioning errors caused by timing errors, thereby improving positioning accuracy.

Optionally, the correction parameter includes: a timing error correction parameter used to correct a carrier phase measurement value, and a time change rate of the timing error correction parameter.

The performing, by the LMF entity, compensation processing on the carrier phase measurement value of the optimal link according to the correction parameter, includes:

determining, by the LMF entity, a sum of a carrier phase measurement value of the optimal link at a first moment and the timing error correction parameter at the first moment as a compensated carrier phase measurement value at the first moment;

and/or,

determining, by the LMF entity, a timing error correction parameter at a second moment based on the timing error correction parameter at the first moment and the time change rate; and determining a sum of the carrier phase measurement value of the optimal link at the second moment and the timing error correction parameter at the second moment, as the compensated carrier phase measurement value at the second moment.

For example, a PRU or base station reports a correction parameter, and its correction parameter includes: a timing error correction parameter $\lambda\phi_{corr}^{ij,Tx\,TEGi,j}$ used to correct the carrier phase measurement value and the time change rate of the timing error correction parameter $\lambda\dot{\phi}_{corr}^{ij,Tx\,TEGi,j}$. If it is considered that the time change rate $\lambda\dot{\phi}_{corr}^{ij,Tx\,TEGi,j}$ of the timing error correction parameters between different moments $t1$ and $t2$ remains unchanged, the timing error correction parameter at t2 moment can be obtained according to the timing error correction parameter and time change rate at t1 moment, that is:

$$\lambda\varphi_{corr}^{ij,Tx\,TEGi,j}(t2) = \lambda\varphi_{corr}^{ij,Tx\,TEGi,j}(t1) + (t2 - t1)\lambda\dot{\varphi}_{corr}^{ij,Tx\,TEGi,j} \qquad (12)$$

If a carrier phase measurement value of a certain target UE u to the base stations $i, j$ at the second moment (or within the valid time range of the timing error correction parameter at the second moment) is $\lambda\varphi_{u}^{ij,Tx\,TEGi,j}$, then in order to eliminate or reduce the measurement error in $\lambda\,\phi_u^{ij,Tx\ TEGi,j}$, the receiver of the target UE u can add the timing error correction parameter $\lambda\,\phi_{corr}^{ij,Tx\ TEGi,j}(t2)$ at the moment t2 to the carrier phase measurement value $\lambda\,\phi_u^{ij,Tx\ TEGi,j}$, and the compensated carrier phase value is $\lambda\,\phi_{u,c}^{ij,Tx\ TEGi,j}$, that is:

$$\lambda\,\phi_{u,c}^{ij,Tx\ TEGi,j} = \lambda\varphi_u^{ij,Tx\ TEGi,j} + \lambda\varphi_{corr}^{ij,Tx\ TEGi,j}(t2) \qquad (13)$$

In this way, the LMF entity performs positioning calculation processing based on the compensated carrier phase value, which can effectively eliminate positioning errors caused by timing errors, thereby improving positioning accuracy.

Optionally, the receiving, by the LMF entity, a correction parameter, includes:

receiving, by the LMF entity, N correction parameters; where the correction parameters include: a timing error correction parameter used to correct a carrier phase measurement value and a time change rate of the timing error correction parameter, N is a positive integer greater than 1.

The performing, by the LMF entity, compensation processing on the carrier phase measurement value of the optimal link according to the correction parameter, includes:

determining, by the LMF entity, a first timing error correction parameter and a first time change rate according to the first timing error correction parameter;
determining, by the LMF entity, a second timing error correction parameter based on the first timing error correction parameter and the first time change rate;
determining, by the LMF entity, a sum of the carrier phase measurement value of the optimal link and the second timing error correction parameter as a compensated carrier phase measurement value.

Optionally, the N correction parameters include: correction parameters transmitted by one first device or base station at N moments, respectively; or correction parameters transmitted by N first devices or base stations at the same moment.

For example, one first device or base station can transmit one correction parameter at N moments, respectively; or, N first devices or base stations can transmit one correction parameter at the same moment, respectively. In this way, for the LMF entity, it can receive correction parameters transmitted by one first device or base station at N moments, and can also receive correction parameters transmitted by N first devices or base stations at the same moment. That is, the LMF entity receives N correction parameters.

When one first device or base station transmits one correction parameter at N moments, respectively, the first timing error parameter and the first time change rate can be determined based on the N correction parameters. For carrier phase measurement values of the target UE received at N-th moment or after the N-th moment, the LMF entity can select carrier phase measurement values of multiple optimal links with best link performance based on above judgment of the link performance, and performs compensate processing on the carrier phase measurement values of the optimal links according to the first timing error parameter and the first time change rate, so as to perform positioning calculation processing based on the compensated carrier phase values, which can effectively eliminate positioning errors caused by timing errors, thereby improving positioning accuracy.

When N first devices or base stations respectively transmit correction parameters, the first timing error parameter and the first time change rate may be determined based on the N correction parameters. For carrier phase measurement values of the target UE received at the moment or within the valid time range of the first timing error parameter and the first time change rate, the LMF entity can select carrier phase measurement values of multiple optimal links with best link performance based on above judgment of the link performance, and performs compensate processing on the carrier phase measurement values of the optimal links according to the first timing error parameter and the first time change rate, so as to perform positioning calculation processing based on the compensated carrier phase values, which can effectively eliminate positioning errors caused by timing errors, thereby improving positioning accuracy.

Optionally, the determining, by the LMF entity, the first timing error correction parameter and the first time change rate based on the N correction parameters, includes one of the following manners:

Manner 1: determining, by the LMF entity, a sum of weighted timing error correction parameters in the N correction parameters as the first timing error correction parameter; and determining, by the LMF entity, a sum of weighted time change rates in the N correction parameters as the first time change rate.

For example, weighting coefficients corresponding to the N carrier phase correction parameters are $P_1$, $P_2$, ...,

$P_N$; weighting coefficients corresponding to N time change rates are $Q_1$, $Q_2$, ..., $Q_N$, then an expression of the first timing error correction parameter is $\sum_{m=1}^{N} P_m \cdot \lambda \varphi_{corr,m}^{ij,Tx\ TEGi,j}$ , and an expression of the first time change rate is $\sum_{m=1}^{N} Q_m \cdot \lambda \dot{\varphi}_{corr,m}^{ij,Tx\ TEGi,j}$ .

Manner 2: determining, by the LMF entity, an average of timing error correction parameters in the N correction parameters as the first timing error correction parameter; and determining an average of time change rates in the N correction parameters value as the first time change rate.

Manner 3: determining, by the LMF entity, a maximum timing error correction parameter or a minimum timing error correction parameter in the N correction parameters as the first timing error correction parameter; and determining a time change rate corresponding to the first timing error correction parameter as the first time change rate.

Optionally, when the maximum value or minimum value of the timing error correction parameters in the N correction parameters is not unique, one of them can be selected based on a predetermined manner, or one of them can be selected randomly, or depending on the LMF side, etc., which is not limited in the embodiment of the present disclosure.

The information transmission method and carrier phase positioning method of the present disclosure will be described hereinafter with reference to specific embodiments.

Embodiment 1 (Downlink or UE-assisted)

Step 101: transmitting, by a base station, downlink PRS to a PRU (such as a reference UE) and a target UE.

Optionally, the base station can notify the PRU of coordinate position information of the base station; or, the base station reports coordinate information of the base station to an LMF, and the LMF forwards coordinates of the base station to the PRU. The reported parameters of the base station is shown in the following Table 1:

Table 1

| serial number | reported parameter | transmitting end | receiving end | note |
|---|---|---|---|---|
| 1 | base station coordinate information | base station | LMF/PRU | calculate timing error correction parameter based on carrier phase measurement |

Step 102: receiving, by the PRU, PRS signals and base station coordinate information from different base stations i and j.

Step 103: calculating, by the PRU, a timing error correction parameter and a time change rate of the timing error correction parameter, based on the PRS signals of different base stations i and j and the base station coordinate information, and recording the timing error correction parameter between the base station i and ij,Tx TEGi,j base station j as $\lambda \phi_{corr}^{ij,Tx\ TEGi,j}$ , and recording the time change rate of the timing error correction parameter as $\lambda \dot{\phi}_{corr}^{ij,TxTEGi,j}$ ; where the PRS signal is used for carrier phase measurement of the PRU, and the base station coordinate information and PRU position (or antenna reference point) coordinate information are used to calculate the timing error correction parameter based on carrier phase measurement and time change rate of the timing error correction parameter.

Step 104: reporting, by the PRU, reported parameters output from the carrier phase measurement to the LMF; where the reported parameters may include: the timing error correction parameter based on the carrier phase measurement, a time change rate of timing error correction parameter, reliability information (such as SNR, DL-PRS, RSRP, CNR, variance, etc.). The reported parameter of the PRU is shown in the following Table 2:

Table 2

| serial number | reported parameter | transmitting end | receiving end | note |
|---|---|---|---|---|
| 1 | timing error correction parameter based on carrier phase measurement | PRU | LMF | used to correct carrier phase measurement value |
| 2 | time change rate of timing error correction parameter | PRU | LMF | used to correct carrier phase measurement value |

(continued)

| serial number | reported parameter | transmitting end | receiving end | note |
|---|---|---|---|---|
| 3 | reliability information (SNR, SINR, DL PRS RSRP, RSRPP, CNR, variance of carrier phase measurement value or average measurement error, LoS/NLoS indication), angle stability) | PRU | LMF | used to judge performance of link, how LMF selects valid correction parameter, and valid PRU; indicate whether correction parameter from LoS path; indicate weight of multiple first correction parameter; |
| 4 | TRP ID and Tx TEG ID from base station/TRP | PRU | LMF | when used for averaging different PRUs, only the same TRP ID and Tx TEG ID are associated |
| 5 | Rx TEG ID, reception beam ID, etc., corresponding to timing error correction parameter based on carrier phase measurement | PRU | LMF | relationship between correction parameter, reception TEG ID and reception beam. used for performing average processing on correction parameters of PRU at different moments |
| 6 | valid time range of timing error correction parameter based on carrier phase measurement associated with Rx TEG ID and reception beam ID | PRU | LMF | valid time range |
| 7 | reporting time stamp | PRU | LMF | indicate reporting time of correction parameter |

Optionally, the PRU can report the reported parameter output of carrier phase measurement to the LMF based on a period, high-level signaling trigger, or autonomous triggering by the PRU.

Optionally, the PRU can report the reported parameter output of carrier phase measurement to the LMF in the following manners:

Manner 1: single PRU reporting timing error correction parameter.

Manner 2: single PRU reporting timing error correction parameter and time change rate of timing error correction parameter.

Manner 3: N PRUs reporting timing error correction parameter and time change rate of timing error correction parameter at the same time.

Manner 4: an identical PRS reporting timing error correction parameter and time change rate of timing error correction parameter at N moments, respectively.

Step 105: receiving, by the target UE, PRS signals from different base stations i and j, performing carrier phase measurement; and outputting, by the target UE, the carrier phase measurement value and reporting the carrier phase measurement value to the LMF. The reported parameters of the target UE are shown in the following Table 3:

Table 3

| serial number | reported parameter | transmitting end | receiving end | note |
|---|---|---|---|---|
| 1 | reliability information (SNR, SINR, DL PRS RSRP, RSRPP, CNR, variance of carrier phase measurement value or average measurement error, LoS/NLoS indication), angle stability) | target UE | LMF | used to judge performance of link, how LMF selects valid correction parameter, and valid PRU; indicate whether correction parameter from LoS path; indicate weight of multiple first correction parameter; |
| 2 | reporting time stamp | target UE | LMF | indicate reporting time of correction parameter |
| 3 | carrier phase measurement value | target UE | LMF | calculate target UE position after compensating carrier phase measurement value |
| 4 | Rx TEG ID, reception beam ID, etc., corresponding to timing error correction parameter based on carrier phase measurement | target UE | LMF | relationship between correction parameter, reception TEG ID and reception beam |
| 5 | valid time range of timing error correction parameter based on carrier phase measurement associated with Rx TEG ID and reception beam ID | target UE | LMF | valid time range |

Step 106: receiving, by the LMF, the timing error correction parameter based on carrier phase measurement, time change rate of the timing error correction parameter, reliability information and other reported parameters reported by the PRU.

Step 107: receiving, by the LMF, the carrier phase measurement value, reliability information and other reported parameters (for example, used to select base stations/TRPs with good link quality for subsequent processing) reported by the target UE.

Step 108: determining, by the LMF, performance of the link according to reliability information obtained in the step 106; and, preferentially selecting, by the LMF, the PRU and base station/TRP with good link quality for subsequent processing.

Step 109: compensating the carrier phase measurement value obtained in the step 107 based on the timing error correction parameter based on the carrier phase measurement and/or the time change rate of the timing error correction parameter; specifically, calculation of the carrier phase correction parameter and compensation manner of the carrier phase measurement value can refer to the above embodiments, which will not be described in detail here.

Step 110: calculating the position of the target UE based on the compensated carrier phase measurement value.

Example 2: (uplink)

Step 201: transmitting, by PRU, uplink SRS to a base station and reporting position (or antenna reference point) coordinate information to the base station. The reported parameters of PRU are shown in the following Table 4:

Table 4

| serial number | reported parameter | transmitting end | receiving end | note |
|---|---|---|---|---|
| 1 | PRU coordinate information | PRU | base station | calculate timing error correction parameter based on carrier phase measurement |

Step 202: receiving, by the base station, the uplink SRS transmitted by the PRU and the coordinate information reported by the PRU.

Step 203: performing, by the base station, carrier phase measurement by using the SRS in the step 201, and further obtaining the timing error correction parameter based on the carrier phase measurement and the time change rate of the timing error correction parameter based on the PRU coordinate information and the base station's own coordinate information.

Step 204: transmitting, by the target UE, the uplink SRS to the base station.

Step 205: receiving, by the base station, the uplink SRS transmitted by the target UE, performing carrier phase measurement to obtain the carrier phase measurement value.

Step 206: reporting to the LMF, by the base station, the timing error correction parameter based on carrier phase measurement and timing error correction parameter change rate determined in the step 203, and the carrier phase measurement value determined in the step 205. The reported parameters of the base station are shown in the following Table 5:

Table 5

| serial number | reported parameter | transmitting end | receiving end | note |
|---|---|---|---|---|
| 1 | timing error correction parameter based on carrier phase measurement | base station | LMF | used to correct carrier phase measurement value |
| 2 | time change rate of timing error correction parameter | base station | LMF | used to correct carrier phase measurement value |
| 3 | reliability information (SNR, SINR, DL PRS RSRP, RSRPP, CNR, variance of carrier phase measurement value or average measurement error, LoS/NLoS indication), angle stability) | base station | LMF | used to judge performance of link, how LMF selects valid correction parameter, and valid PRU; indicate whether correction parameter from LoS path; indicate weight of multiple first correction parameter; |
| 4 | carrier phase measurement value | base station | | calculate target UE position after compensating carrier phase measurement value |
| 5 | Rx TEG ID, reception beam ID, etc., corresponding to timing error correction parameter based on carrier phase measurement | base station | LMF | relationship between correction parameter, reception TEG ID and reception beam |
| 6 | valid time range of timing error correction parameter based on carrier phase | base station | LMF | valid time range |
| 7 | reporting time stamp | base station | LMF | indicate reporting time of correction parameter |

Optionally, the base station can report the reported parameter output of carrier phase measurement to the LMF based on a period, high-level signaling trigger, or autonomous triggering by the base station.

Optionally, the base station can report the reported parameter output of carrier phase measurement to the LMF in the following manners:

Manner 1: single base station reporting timing error correction parameter.

Manner 2: single base station reporting timing error correction parameter and time change rate of timing error correction parameter.

Manner 3: N base stations reporting timing error correction parameter and time change rate of timing error correction parameter at the same time.

Manner 4: an identical base station reporting timing error correction parameter and time change rate of timing error correction parameter at N moments, respectively.

Step 207: receiving, by the LMF, the timing error correction parameter based on carrier phase measurement, the time change rate of the timing error correction parameter, the carrier phase measurement value, reliability information and other reported parameters reported by the base station.

Step 208: determining, by the LMF, performance of the link based on the reliability information obtained in the step 207, and preferentially selecting the base station/TRP with good link quality for subsequent processing.

Step 209: compensating the carrier phase measurement value based on the timing error correction parameter base on the carrier phase measurement and/or the change rate of the timing error correction parameter; specifically, calculation of the carrier phase correction parameter and compensation manner of the carrier phase measurement value can refer to the above embodiments, which will not be described in detail here.

Step 210: calculating the position of the target UE based on the compensated carrier phase measurement value.

As shown in FIG. 4, one embodiment of the present disclosure provides a carrier phase positioning method, including the following steps:

Step 41: receiving, by UE, first information and PRSs transmitted by at least two second devices; where the first information includes a correction parameter determined by a first device.

Optionally, the second device may be a base station or a road side unit (RSU). The position information can be understood as information used to characterize the position of the second device, which can be represented by position coordinates, or can also be represented in other forms, etc., which are not limited to this in the embodiments of the present disclosure.

Optionally, the correction parameter may be transmitted by the first device or by the LMF entity. Then, the receiving, by UE, first information includes:

receiving, by the UE, first information transmitted by the first device;
and/or,
receiving, by the UE, first information transmitted by a location management function (LMF) entity.

Optionally, the first device is a reference device whose position is known in advance or whose position can be accurately measured. The first device may be referred as a positioning reference unit (PRU), and its type may be a reference UE or a reference base station, etc.

For example, the first device may determine, based on the PRS of the second devices and the position information, a carrier phase difference of the PRS of at least two second devices received by the first device, and determine a correction parameter based on the carrier phase difference and the position information. The first device may transmit the correction parameter to the target UE, or the first device may transmit the correction parameter and corresponding reliability information to the LMF, and the LMF forwards it to the target UE.

Step 42: performing, by the UE, carrier phase measurement based on the PRS transmitted by at least two second devices, thereby obtaining a carrier phase measurement value.

For example, when the correction parameter is determined based on the PRS of the base station and the position information of the base station, the UE performs carrier phase measurement based on the PRS transmitted by the base station to obtain the carrier phase measurement value; or, when the correction parameter is determined based on the PRS of the RSU and the position information of the RSU, the UE performs carrier phase measurement based on the PRS transmitted by the RSU to obtain the carrier phase measurement value.

Step 43: performing, by the UE, compensation processing on the carrier phase measurement value according to the first information.

For example, in the downlink process, the UE may receive the correction parameter transmitted by the first device, and perform compensation processing on the carrier phase measurement value obtained via measurement based on the correction parameter. Alternatively, the UE receives the correction parameter of the first device forwarded by the LMF entity, and performs compensation processing on the carrier phase measurement value obtained via measurement based on the correction parameter.

Step 44: performing, by the UE, position calculation processing based on the compensated carrier phase measurement value.

In the above solution, the first device determines the correction parameter used to correct the carrier phase measurement value, and transmits the correction parameter to the UE, so that the UE can perform, according to the correction parameter, compensation processing on a carrier phase measurement value measured by the UE, and perform position calculation processing based on the compensated carrier phase measurement value, which can effectively eliminate positioning errors caused by timing errors, thereby improving positioning accuracy. Or, the first device transmits the correction parameter to the LMF entity, and then the LMF entity forwards it to the UE, so that the UE can perform compensation processing on the measured carrier phase measurement value according to the correction parameter, and perform position calculation processing based on the compensated carrier phase measurement value, which can effectively eliminate positioning errors caused by timing errors, thereby improving positioning accuracy.

Optionally, the first information further includes at least one of the following:

reliability information of the correction parameter;

base station identifier information;

transmission channel timing error group ID;

reception channel timing error group ID corresponding to the correction parameter;

reception beam identifier information corresponding to the correction parameter;

valid time range of the correction parameter; or,

reporting time stamp of the correction parameter;

and/or,

the second information further includes at least one of the following:

reliability information of the correction parameter;

reception channel timing error group ID corresponding to the correction parameter;

reception beam identifier information corresponding to the correction parameter;

valid time range of the correction parameter; or,

reporting time stamp of the correction parameter.

Optionally, the reliability information can be used to determine link performance. For example, based on the reliability information, the LMF side can select a valid correction parameter, a valid first device, etc. Optionally, the reliability information can be used to indicate whether the correction parameter comes from LoS path, and/or to indicate weights of multiple correction parameters, etc., which is limited to this in the embodiment of the present disclosure.

Optionally, the reliability information includes but is not limited to at least one of the following: signal-to-noise ratio (SNR), signal-to-noise and interference ratio (SINR), downlink-positioning reference signal (DL-PRS), reference signal received power (RSRP), carrier noise ratio (CNR), variance of carrier phase measurement value, measurement error average value, indication information used to indicate line of sight or non-line of sight (i.e., LoS/NLoS), angle stability, etc.

For example, the first device may receive the PRS and the position information of the base station transmitted by the base station, and determine the correction parameter based on the PRS and the position information of the base station. The parameters reported by the first device to the target UE entity may include at least one of the following: correction parameter, reliability information, base station identifier information, transmission channel Rx timing error group ID, reception channel Rx timing error group ID corresponding to the correction parameter, reception beam identifier information corresponding to the correction parameter, valid time range of correction parameter, and reporting time stamp of correction parameter.

For another example, the first device may receive the PRS and the position information of the RSU transmitted by the RSU, and determine the correction parameter based on the PRS and the position information of the RSU. The parameters reported by the first device to the target UE may include at least one of the following: correction parameter, reliability information, reception channel Rx timing error group ID corresponding to the correction parameter, reception beam identifier information corresponding to the correction parameter, valid time range of correction parameter and the reporting timestamp of correction parameter.

The base station identifier information may be a base station ID or a TRP ID. The LMF entity can perform averaging for different first devices, based on the same TRP ID and Tx TEG ID association according to the base station identifier information and Tx TEG ID.

The Rx TEG ID corresponding to the correction parameter and the reception beam identifier information corresponding to the correction parameter can indicate relationship between a timing error correction parameter and Rx TEG as well as reception beams. The target UE can perform average processing on the timing error correction parameters of the first device at different moments, according to Rx TEG ID corresponding to the correction parameter and the reception beam identifier information corresponding to the correction parameter.

The valid time range of the correction parameter is used to indicate a time range in which the correction parameter is valid. The reporting time stamp of the correction parameter is used to indicate reporting time of the correction parameter. The target UE can select the corresponding correction parameter for compensation processing based on the reporting time and valid time range of the correction parameter.

Optionally, the performing, by the UE, compensation processing on the carrier phase measurement value according to the correction parameter and the reliability information, includes:

determining, by the UE, a carrier phase measurement value of an optimal link, according to the reliability information;

performing, by the UE, compensation processing on the carrier phase measurement value of the optimal link according to the correction parameter.

For example, the UE can determine performance of the link based on reliability information such as SNR/DL-PRS/RSRP, and preferably selects a link with good positioning performance for positioning calculation. It is to be noted that the optimal link here is not limited to one, but can be multiple. For example, the carrier phase measurement values of four optimal links can be selected for positioning calculation processing.

Optionally, the correction parameter includes: a timing error correction parameter used to correct the carrier phase measurement value.

The performing, by the UE, compensation processing on the carrier phase measurement value of the optimal link according to the correction parameter, includes:

determining, by the UE, a sum of the carrier phase measurement value of the optimal link and the timing error correction parameter as the compensated carrier phase measurement value.

For example, a PRU reports correction parameter, and its correction parameter is a timing error correction parameter $\lambda\varphi_{corr}^{ij,Tx\ TEGi,j}$ used to correct the carrier phase measurement value. If a carrier phase measurement value of a certain target UE $u$ for base stations $i, j$ is $\lambda\varphi_u^{ij,Tx\ TEGi,j}$, then, in order to eliminate or reduce the measurement error in $\lambda\varphi_u^{ij,Tx\ TEGi,j}$, the receiver of the target UE u can add the received timing error correction parameter $\lambda\varphi_{corr}^{ij,Tx\ TEGi,j}$ to the carrier phase measurement value $\lambda\varphi_u^{ij,Tx\ TEGi,j}$, and the compensated carrier phase value is $\lambda\varphi_{u,c}^{ij,Tx\ TEGi,j}$, that is:

$$\lambda\varphi_{u,c}^{ij,Tx\ TEGi,j} = \lambda\varphi_u^{ij,Tx\ TEGi,j} + \lambda\varphi_{corr}^{ij,Tx\ TEGi,j} \quad (11)$$

In this way, the UE performs positioning calculation processing based on the compensated carrier phase value, which can effectively eliminate positioning errors caused by timing errors, thereby improving positioning accuracy.

Optionally, the correction parameter includes: a timing error correction parameter used to correct a carrier phase measurement value, and a time change rate of the timing error correction parameter.

The performing, by the UE, compensation processing on the carrier phase measurement value of the optimal link according to the correction parameter, includes:

determining, by the UE, a sum of a carrier phase measurement value of the optimal link at a first moment and the timing error correction parameter at the first moment as a compensated carrier phase measurement value at the first moment;

and/or,

determining, by the UE, a timing error correction parameter at a second moment based on the timing error correction parameter at the first moment and the time change rate; and determining a sum of the carrier phase measurement value of the optimal link at the second moment and the timing error correction parameter at the second moment, as the compensated carrier phase measurement value at the second moment.

For example, a PRU reports a correction parameter, and its correction parameter includes: a timing error correction parameter $\lambda\varphi_{corr}^{ij,Tx\ TEGi,j}$ used to correct the carrier phase measurement value and the time change rate of the timing error correction parameter $\lambda\dot{\varphi}_{corr}^{ij,Tx\ TEGi,j}$. If it is considered that the time change rate $\lambda\dot{\varphi}_{corr}^{ij,Tx\ TEGi,j}$ of the timing error correction parameters between different moments $t1$ and $t2$ remains unchanged, the timing error correction parameter at $t2$ moment can be obtained according to the timing error correction parameter and time change rate at t1 moment, that is:

$$\lambda\varphi_{corr}^{ij,Tx\ TEGi,j}(t2) = \lambda\varphi_{corr}^{ij,Tx\ TEGi,j}(t1) + (t2-t1)\lambda\dot{\varphi}_{corr}^{ij,Tx\ TEGi,j} \quad (12)$$

If a carrier phase measurement value of a certain target UE u to the base stations $i, j$ at the second moment (or within the valid time range of the timing error correction parameter at the second moment) is $\lambda\varphi_u^{ij,Tx\ TEGi,j}$, then in order to eliminate or reduce the measurement error in $\lambda\varphi_u^{ij,Tx\ TEGi,j}$, the receiver of the target UE u can add the timing error

correction parameter $\lambda\phi_{corr}^{ij,Tx\ TEGi,j}(t2)$ at the moment t2 to the carrier phase measurement value $\lambda\phi_{u}^{ij,Tx\ TEGi,j}$ , and the compensated carrier phase value is $\lambda\phi_{u,c}^{ij,Tx\ TEGi,j}$ , that is:

$$\lambda\phi_{u,c}^{ij,Tx\ TEGi,j} = \lambda\varphi_{u}^{ij,Tx\ TEGi,j} + \lambda\varphi_{corr}^{ij,Tx\ TEGi,j}(t2) \qquad (13)$$

In this way, the UE performs positioning calculation processing based on the compensated carrier phase value, which can effectively eliminate positioning errors caused by timing errors, thereby improving positioning accuracy.

Optionally, the receiving, by the UE, a correction parameter and the reliability information, includes:
receiving, by the UE, N correction parameters and the reliability information; where the correction parameters include: a timing error correction parameter used to correct a carrier phase measurement value and a time change rate of the timing error correction parameter, N is a positive integer greater than 1.

The performing, by the UE, compensation processing on the carrier phase measurement value of the optimal link according to the correction parameter, includes:

determining, by the UE, a first timing error correction parameter and a first time change rate according to the N timing error correction parameters;
determining, by the UE, a second timing error correction parameter based on the first timing error correction parameter and the first time change rate;
determining, by the UE, a sum of the carrier phase measurement value of the optimal link and the second timing error correction parameter as a compensated carrier phase measurement value.

Optionally, the N correction parameters include: correction parameters transmitted by one first device or base station at N moments, respectively; or correction parameters transmitted by N first devices or base stations at the same moment.

For example, one first device can transmit one correction parameter at N moments, respectively; or, N first devices can transmit one correction parameter at the same moment, respectively. In this way, for the UE, it can receive correction parameters transmitted by one first device at N moments (or, correction parameters and corresponding reliability information transmitted by one first device, which are forwarded by LMF), and can also receive correction parameters transmitted by N first devices at the same moment (or, correction parameters and corresponding reliability information transmitted by N first devices at the same moment, which are forwarded by LMF). That is, the UE receives N correction parameters.

Optionally, when the first device transmits correction parameters to the target UE or the LMF entity, corresponding reliability information can be transmitted together. For example, when one first device transmits correction parameters at N moments respectively, the first timing error parameter and the first time change rate based on the N correction parameters. For carrier phase measurement values obtained via measurement at N-th moment or after the N-th moment, the UE can select carrier phase measurement values of multiple optimal links with best link performance based on above judgment of the link performance, and performs compensate processing on the carrier phase measurement values of the optimal links according to the first timing error parameter and the first time change rate, so as to perform positioning calculation processing based on the compensated carrier phase values, which can effectively eliminate positioning errors caused by timing errors, thereby improving positioning accuracy.

When N first devices respectively transmit correction parameters, the first timing error parameter and the first time change rate may be determined based on the N correction parameters. For carrier phase measurement values obtained via measurement at the moment or within the valid time range of the first timing error parameter and the first time change rate, the UE can select carrier phase measurement values of multiple optimal links with best link performance based on above judgment of the link performance, and performs compensate processing on the carrier phase measurement values of the optimal links according to the first timing error parameter and the first time change rate, so as to perform positioning calculation processing based on the compensated carrier phase values, which can effectively eliminate positioning errors caused by timing errors, thereby improving positioning accuracy.

Optionally, the determining, by the UE, the first timing error correction parameter and the first time change rate based on the N correction parameters, includes one of the following manners:
Manner 1: determining, by the UE, a sum of weighted timing error correction parameters in the N correction parameters as the first timing error correction parameter; and determining, by the UE, a sum of weighted time change rates in the N correction parameters as the first time change rate.

For example, weighting coefficients corresponding to the N carrier phase correction parameters are $P_1$, $P_2$, ..., $P_N$; weighting coefficients corresponding to N time change rates are $Q_1$, $Q_2$, ..., $Q_N$, then an expression of the first timing error correction parameter is $\sum_{m=1}^{N} P_m \cdot \lambda\varphi_{corr,m}^{ij,\text{Tx TEGi,j}}$ , and an expression of the first time change rate is $\sum_{m=1}^{N} Q_m \cdot \lambda\dot{\varphi}_{corr,m}^{ij,\text{Tx TEGi,j}}$ .

Manner 2: determining, by the UE, an average of timing error correction parameters in the N correction parameters as the first timing error correction parameter; and determining an average of time change rates in the N correction parameters value as the first time change rate.

Manner 3: determining, by the UE, a maximum timing error correction parameter or a minimum timing error correction parameter in the N correction parameters as the first timing error correction parameter; and determining a time change rate corresponding to the first timing error correction parameter as the first time change rate.

Optionally, when the maximum value or minimum value of the timing error correction parameters in the N correction parameters is not unique, one of them can be selected based on a predetermined manner, or one of them can be selected randomly, or depending on the LMF side, etc., which is not limited in the embodiment of the present disclosure.

The information transmission method and carrier phase positioning method of the present disclosure will be described hereinafter with reference to specific embodiments.

Embodiment 3 (Downlink or UE-based/Uu+PC5)

Step 301: transmitting, by a base station, downlink PRS to PRU (such as a reference UE) and a target UE;

Optionally, the base station can notify the PRU of the base station coordinate position information; or, the base station reports the base station coordinate information to the LMF, and the LMF forwards the base station coordinates to the PRU. The reported parameters of the base station are shown in the following Table 6:

Table 6

| serial number | reported parameter | transmitting end | receiving end | note |
|---|---|---|---|---|
| 1 | base station coordinate information | base station | LMF/target UE | calculate timing error correction parameter based on carrier phase measurement |

Step 302: receiving, by the PRU, PRS signals and base station coordinate information from different base stations i and j;

Step 303: calculating, by the PRU, a timing error correction parameter and a time change rate of the timing error correction parameter, based on the PRS signals of different base stations i and j and the base station coordinate information, and recording the timing error correction parameter between the base station i and base station j as $\lambda\phi_{corr}^{ij,\text{Tx TEGi,j}}$ , and recording the time change rate of the timing error correction parameter as $\lambda\dot{\phi}_{corr}^{ij,\text{TxTEGi,j}}$ ; where the PRS signal is used for carrier phase measurement of the PRU, and the base station coordinate information and PRU position (or antenna reference point) coordinate information are used to calculate the timing error correction parameter based on carrier phase measurement and time change rate of the timing error correction parameter.

Step 304: reporting, by the PRU, reported parameters output from the carrier phase measurement to the LMF/target UE; where the reported parameters may include: the timing error correction parameter based on the carrier phase measurement, a time change rate of correction parameter, reliability information (such as SNR, DL-PRS, RSRP, CNR, variance, etc.). The reported parameter of the PRU is shown in the following Table 7:

Table 7

| serial number | reported parameter | transmitting end | receiving end | note |
|---|---|---|---|---|
| 1 | timing error correction parameter based on carrier phase measurement | PRU | LMF/target UE | used to correct carrier phase measurement value |

(continued)

| serial number | reported parameter | transmitting end | receiving end | note |
|---|---|---|---|---|
| 2 | time change rate of timing error correction parameter | PRU | LMF/target UE | used to correct carrier phase measurement value |
| 3 | reliability information (SNR, SINR, DL PRS RSRP, RSRPP, CNR, variance of carrier phase measurement value or average measurement error, LoS/NLoS indication), angle stability) | PRU | LMF/target UE | used to judge performance of link, how LMF selects valid correction parameter, and valid PRU; indicate whether correction parameter from LoS path; indicate weight of multiple first correction parameter; |
| 4 | TRP ID and Tx TEG ID from base station/TRP | PRU | LMF/target UE | when used for averaging different PRUs, only the same TRP ID and Tx TEG ID are associated |
| 5 | Rx TEG ID, reception beam ID, etc., corresponding to timing error correction parameter based on carrier phase measurement | PRU | LMF/target UE | relationship between correction parameter, reception TEG ID and reception beam. used for performing average processing on correction parameters of PRU at different moments |
| 6 | valid time range of timing error correction parameter based on carrier phase measurement associated with Rx TEG ID and reception beam ID | PRU | LMF/target UE | valid time range |
| 7 | reporting time stamp | PRU | LMF/target UE | indicate reporting time of correction parameter |

Optionally, the PRU can report the reported parameter output of carrier phase measurement to the LMF/target UE based on a period, high-level signaling trigger, or autonomous triggering by the PRU.

For example, the PRU can directly report the reported parameters output of carrier phase measurement to the target UE on PC5 interface sidelink. Alternatively, the PRU can report the reported parameters output of the carrier phase measurement to the LMF on NR Uu interface, and the LMF forwards the reported parameters to the target UE.

Optionally, the PRU can report the reported parameter output of carrier phase measurement to the LMF/target UE in the following manners:

Manner 1: single PRU reporting timing error correction parameter.

Manner 2: single PRU reporting timing error correction parameter and time change rate of timing error correction parameter.

Manner 3: N PRUs reporting timing error correction parameter and time change rate of timing error correction parameter at the same time.

Manner 4: an identical PRS reporting timing error correction parameter and time change rate of timing error correction parameter at N moments, respectively.

Step 305: receiving, by the target UE, PRS signals from different base stations i and j, performing carrier phase measurement to obtain the carrier phase measurement value.

Step 306: receiving, by the target UE, the timing error correction parameter based on carrier phase measurement, time change rate of the timing error correction parameter, reliability information and other reported parameters reported by the PRU or forwarded by the LMF.

Step 307: determining, by the target UE, performance of the link according to reliability information obtained in the step 306; and, preferentially selecting, by the target UE, the PRU and base station/TRP with good link quality for subsequent processing.

Step 308: compensating the carrier phase measurement value obtained in the step 305 based on the timing error correction parameter based on the carrier phase measurement and/or the time change rate of the timing error correction parameter; specifically, calculation of the carrier phase correction parameter and compensation manner of the carrier phase measurement value can refer to the above embodiments, which will not be described in detail here.

Step 309: calculating the position of the target UE based on the compensated carrier phase measurement value.

Embodiment 4 (sidelink-only outside coverage)

Step 401: receiving, by PRU, S-PRS signals from different RSU i and j.

S-PRS is sidelink PRS, which is PRS between the RSU and UE, or PRS between UEs.

Step 402: calculating, by the PRU, a timing error correction parameter and a time change rate of the timing error correction parameter, based on the PRS signals of different RSUs i and j, and recording the timing error correction parameter between the RSUs i, j as $\lambda\varphi_{corr}^{ij,Tx\,TEGi,j}$, and recording the time change rate of the timing error correction parameter as $\lambda\dot{\varphi}_{corr}^{ij,TxTEGi,j}$; where the S-PRS signal is used for carrier phase measurement of the PRU, and PRU position (or antenna reference point) coordinate information is used to calculate the timing error correction parameter based on carrier phase measurement and time change rate of the timing error correction parameter.

Step 403: reporting, by the PRU, reported parameters output from the carrier phase measurement to the target UE; where the reported parameters may include: the timing error correction parameter based on the carrier phase measurement, a time change rate of correction parameter, reliability information (such as SNR, DL-PRS, RSRP, CNR, variance, etc.). The reported parameter of the PRU is shown in the following Table 8:

Table 8

| serial number | reported parameter | transmitting end | receiving end | note |
|---|---|---|---|---|
| 1 | timing error correction parameter based on carrier phase measurement | PRU | target UE | used to correct carrier phase measurement value |
| 2 | time change rate of timing error correction parameter | PRU | target UE | used to correct carrier phase measurement value |
| 3 | reliability information (SNR, SINR, DL PRS RSRP, RSRPP, CNR, variance of carrier phase measurement value or average measurement error, LoS/NLoS indication), angle stability) | PRU | target UE | used to judge performance of link, how LMF selects valid correction parameter, and valid PRU; indicate whether correction parameter from LoS path; indicate weight of multiple first correction parameter; |
| 4 | Rx TEG ID, reception beam ID, etc., corresponding to timing error correction parameter based on carrier phase measurement | PRU | target UE | relationship between correction parameter, reception TEG ID and reception beam. used for performing average processing on correction parameters of PRU at different moments |

(continued)

| serial number | reported parameter | transmitting end | receiving end | note |
|---|---|---|---|---|
| 5 | valid time range of timing error correction parameter based on carrier phase measurement associated with Rx TEG ID and reception beam ID | PRU | target UE | valid time range |
| 6 | reporting time stamp | PRU | target UE | indicate reporting time of correction parameter |

Optionally, the PRU can report the reported parameter output of carrier phase measurement to the target UE based on a period, high-level signaling trigger, or autonomous triggering by the PRU. For example, the PRU can report the reported parameters output of carrier phase measurement to the target UE on PC5 interface sidelink.

Optionally, the PRU can report the reported parameter output of carrier phase measurement to the target UE in the following manners:

Manner 1: single PRU reporting timing error correction parameter.

Manner 2: single PRU reporting timing error correction parameter and time change rate of timing error correction parameter.

Manner 3: N PRUs reporting timing error correction parameter and time change rate of timing error correction parameter at the same time.

Manner 4: an identical PRS reporting timing error correction parameter and time change rate of timing error correction parameter at N moments, respectively.

Step 404: receiving, by the target UE, S-PRS signals from different RSUs i and j, and performing carrier phase measurement to obtain a carrier phase measurement value.

Step 405: receiving, by the target UE, the timing error correction parameter based on carrier phase measurement, time change rate of the timing error correction parameter, reliability information and other reported parameters reported by the PRU or forwarded by the LMF.

Step 406: determining, by the target UE, performance of the link according to reliability information obtained in the step 405; and, preferentially selecting, by the target UE, the PRU and base station/TRP with good link quality for subsequent processing.

Step 407: compensating the carrier phase measurement value obtained in the step 404 based on the timing error correction parameter based on the carrier phase measurement and/or the time change rate of the timing error correction parameter; specifically, calculation of the carrier phase correction parameter and compensation manner of the carrier phase measurement value can refer to the above embodiments, which will not be described in detail here.

Step 408: calculating the position of the target UE based on the compensated carrier phase measurement value.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The above embodiments respectively introduce the information transmission method and the carrier phase positioning method of the present disclosure. The following embodiment will further describe the corresponding devices in conjunction with the accompanying drawings.

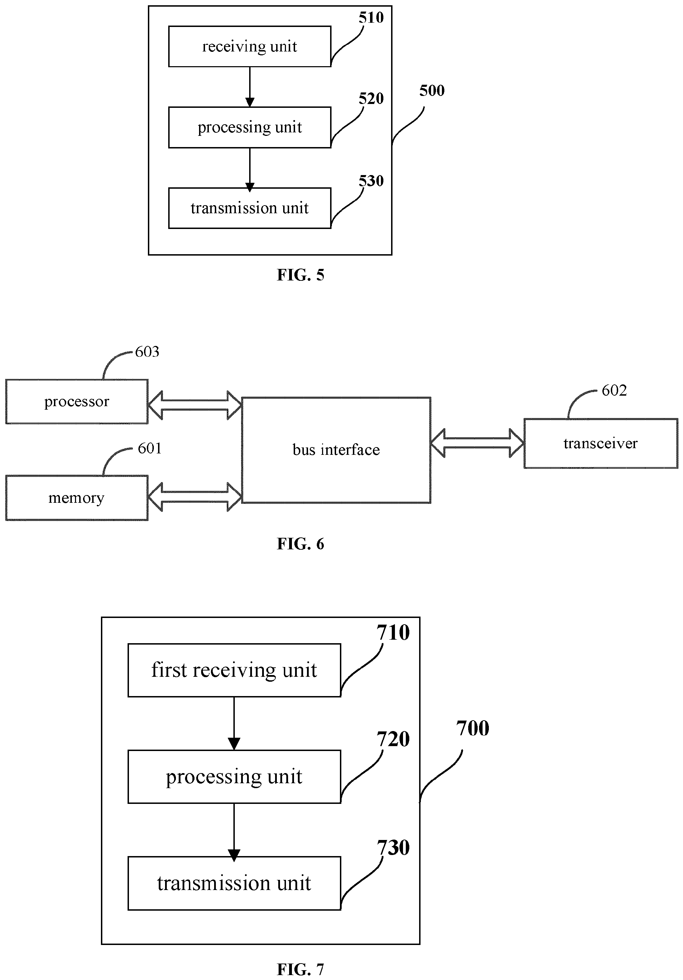

Specifically, as shown in FIG. 5, one embodiment of the present disclosure provides an information transmission device 500. Optionally, the information transmission device 500 can be applied to a first device side. The device 500 includes:

a receiving unit 510 configured to receive PRS and position information of at least two second devices, sent by the at least two second devices;

a processing unit 520 configured to determine a correction parameter according to the PRS and position information of the at least two second devices; where the correction parameter is used to correct a carrier phase measurement value of a target UE;

a transmission unit 530 configured to transmit first information to a target UE or an LMF entity; where the first information includes the correction parameter.

Optionally, the first information further includes at least one of the following:

reliability information of the correction parameter;
base station identifier information;
transmission channel timing error group ID;
reception channel timing error group ID corresponding to the correction parameter;
reception beam identifier information corresponding to the correction parameter;
valid time range of the correction parameter; or,
reporting time stamp of the correction parameter.

Optionally, the processing unit 520 is further used to:

determine a distance difference between the at least two second devices and the first device, according to the position information of at least two second devices and position information of the first device;
according to PRS of the at least two second devices, determine a carrier phase difference for receiving the PRS of the at least two second devices;
determine a timing error correction parameter according to the distance difference and the carrier phase difference, and determine the timing error correction parameter as the correction parameter; where the timing error correction parameter is used to correct a carrier phase measurement value.

Optionally, the processing unit 520 is further used to:
determine the timing error correction parameter with the following formula:

$$\lambda \varphi_{corr}^{ij,Tx\,TEGi,j}(t_1) = d_{l,Rx\,TEGi,j}^{ij,Tx\,TEGi,j} - \lambda \varphi_{l,Rx\,TEGi,j}^{ij,Tx\,TEGi,j}(t_1)$$

Where $\lambda \varphi_{corr}^{ij,Tx\,TEGi,j}(t_1)$ is the timing error correction parameter; $d_{l,Rx\,TEGi,j}^{ij,Tx\,TEGi,j}$ is the distance difference; $\varphi_{l,Rx\,TEGi,j}^{ij,Tx\,TEGi,j}(t_1)$ is the carrier phase difference; and $\lambda$ is a carrier wavelength.

Optionally, the processing unit 520 is further used to:

determine a timing error correction parameter at a first moment according to PRS and position information of the at least two second devices at the first moment;
determine a timing error correction parameter at a second moment according to PRS and position information of the at least two second devices at the second moment;
determine a timing error correction parameter change rate according to the timing error correction parameter at the first moment and the timing error correction parameter at the second moment, and determine the timing error correction parameter and the timing error correction parameter change rate as the correction parameter.

Optionally, the processing unit 520 is further used to:

determine the timing error correction parameter change rate through the following formula:

$$\lambda \dot{\varphi}_{corr}^{ij,Tx\,TEGi,j} = \frac{\lambda \varphi_{corr}^{ij,Tx\,TEGi,j}(t_1) - \lambda \varphi_{corr}^{ij,Tx\,TEGi,j}(t_0)}{t_1 - t_0}$$

where $\lambda\dot{\varphi}_{corr}^{ij,\text{Tx TEGi},j}$ is the timing error correction parameter change rate; $\lambda\varphi_{corr}^{ij,\text{Tx TEGi},j}(t_0)$ is the timing error correction parameter at the first moment; $\lambda\varphi_{corr}^{ij,\text{Tx TEGi},j}(t_1)$ is the timing error correction parameter at the second moment; $t_0$ is the first moment; and $t_1$ is the second moment.

Optionally, the transmission unit 530 is further used to:

transmit one correction parameter to the target UE or the LMF entity; where the correction parameter includes: the timing error correction parameter used to correct the carrier phase measurement value, or the correction parameter includes: the timing error correction parameter and the timing error correction parameter change rate;
or,
transmit a correction parameter corresponding to each moment to the target UE or the LMF entity at N moments, respectively; where the correction parameter includes: the timing error correction parameter and the timing error correction parameter change rate, where N is a positive integer greater than 1.

Optionally, the transmission unit 530 is further used to:

transmit the first information to the target UE or the LMF entity, in a periodic transmission manner;
or,
transmit the first information to the target UE or the LMF entity, according to high-layer signaling;
or,
transmit the first information to the target UE or the LMF entity when the first device determines that a triggering condition for correction parameter reporting is met.

Optionally, the triggering condition for the correction parameter reporting may include: a parameter value of the reliability information reaches a first threshold.

It is to be noted here that the above device provided in the embodiment of the present disclosure can implement all the method steps implemented in the above method embodiment on the first device side, and can achieve the same technical effect. The parts and beneficial effects of this embodiment that are the same as those in the method embodiment will not be described in detail here.

In order to better achieve the above object, as shown in FIG. 6, an information transmission device is provided and includes a memory 61, a transceiver 62 and a processor 63. The memory 61 is used to store a computer program; the transceiver 62 is used to send and receive data under the control of the processor 63. The processor 63 is used to read the computer program in the memory and perform the following operations:

receiving PRS and position information of at least two second devices, sent by the at least two second devices;
determining a correction parameter according to the PRS and position information of the at least two second devices; where the correction parameter is used to correct a carrier phase measurement value of a target UE;
transmitting first information to a target UE or an LMF entity; where the first information includes the correction parameter.

Optionally, the first information further includes at least one of the following:

reliability information of the correction parameter;
base station identifier information;
transmission channel timing error group ID;
reception channel timing error group ID corresponding to the correction parameter;
reception beam identifier information corresponding to the correction parameter;
valid time range of the correction parameter; or,
reporting time stamp of the correction parameter.

Optionally, the processor 63 is used to read the computer program in the memory and perform the following operations:

determining a distance difference between the at least two second devices and the first device, according to the position information of at least two second devices and position information of the first device;

according to PRS of the at least two second devices, determining a carrier phase difference for receiving the PRS of the at least two second devices;

determining a timing error correction parameter according to the distance difference and the carrier phase difference, and determining the timing error correction parameter as the correction parameter; where the timing error correction parameter is used to correct a carrier phase measurement value.

Optionally, the processor 63 is used to read the computer program in the memory and perform the following operations:

determining the timing error correction parameter with the following formula:

$$\lambda\varphi_{corr}^{ij,Tx\ TEGi,j}(t_1) = d_{l,Rx\ TEGi,j}^{ij,Tx\ TEGi,j} - \lambda\varphi_{l,Rx\ TEGi,j}^{ij,Tx\ TEGi,j}(t_1)$$

Where $\lambda\varphi_{corr}^{ij,Tx\ TEGi,j}(t_1)$ is the timing error correction parameter; $d_{l,Rx\ TEGi,j}^{ij,Tx\ TEGi,j}$ is the distance difference; $\varphi_{l,Rx\ TEGi,j}^{ij,Tx\ TEGi,j}(t_1)$ is the carrier phase difference; and $\lambda$ is a carrier wavelength.

Optionally, the processor 63 is used to read the computer program in the memory and perform the following operations:

determining a timing error correction parameter at a first moment according to PRS and position information of the at least two second devices at the first moment;

determining a timing error correction parameter at a second moment according to PRS and position information of the at least two second devices at the second moment;

determining a timing error correction parameter change rate according to the timing error correction parameter at the first moment and the timing error correction parameter at the second moment, and determining the timing error correction parameter and the timing error correction parameter change rate as the correction parameter.

Optionally, the processor 63 is used to read the computer program in the memory and perform the following operations:

determining the timing error correction parameter change rate through the following formula:

$$\lambda\dot{\varphi}_{corr}^{ij,Tx\ TEGi,j} = \frac{\lambda\varphi_{corr}^{ij,Tx\ TEGi,j}(t_1) - \lambda\varphi_{corr}^{ij,Tx\ TEGi,j}(t_0)}{t_1 - t_0}$$

where $\lambda\dot{\varphi}_{corr}^{ij,Tx\ TEGi,j}$ is the timing error correction parameter change rate; $\lambda\varphi_{corr}^{ij,Tx\ TEGi,j}(t_0)$ is the timing error correction parameter at the first moment; $\lambda\varphi_{corr}^{ij,Tx\ TEGi,j}(t_1)$ is the timing error correction parameter at the second moment; $t_0$ is the first moment; and $t_1$ is the second moment.

Optionally, the processor 63 is used to read the computer program in the memory and perform the following operations:

transmitting one correction parameter to the target UE or the LMF entity; where the correction parameter includes: the timing error correction parameter used to correct the carrier phase measurement value, or the correction parameter includes: the timing error correction parameter and the timing error correction parameter change rate; or,

transmitting a correction parameter corresponding to each moment to the target UE or the LMF entity at N moments, respectively; where the correction parameter includes: the timing error correction parameter and the timing error correction parameter change rate, where N is a positive integer greater than 1.

Optionally, the processor 63 is used to read the computer program in the memory and perform the following operations:

transmitting the first information to the target UE or the LMF entity, in a periodic transmission manner;
or,
transmitting the first information to the target UE or the LMF entity, according to high-layer signaling;
or,
transmitting the first information to the target UE or the LMF entity when the first device determines that a triggering condition for correction parameter reporting is met.

Optionally, the triggering condition for the correction parameter reporting may include: a parameter value of the reliability information reaches a first threshold.

In FIG. 6, a bus architecture may include any number of interconnected bus and bridge. Specifically, various circuits of one or more processors, which are represented by the processor 63, and one or more memories, which are represented by the memory 61, are linked together. The bus architecture may link various other circuits, such as a peripheral device, voltage regulator and a power management circuit together. These features are well known in this field; therefore, this disclosure does not make further description on these features. The bus interface provides an interface. The transceiver 62 may be multiple elements, including a transmitter and a receiver and provide units, which communicate with other devices on the transmission medium. The transmission medium includes radio channels, wired channels, optical cables, etc. The processor 63 is responsible for managing the bus architecture and the normal processing. The memory 61 may be used to store data used by the processor 63 for performing operations.

The processor 63 may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided in the embodiment of the present disclosure can implement all the method steps implemented in the above method embodiment on the first device side, and can achieve the same technical effect. The parts and beneficial effects of this embodiment that are the same as those in the method embodiment will not be described in detail here.

One embodiment of the present disclosure provides a processor-readable storage medium, including a computer program stored thereon; where the computer program is used to cause a processor to perform steps of the above information transmission method on the first device side, and can achieve the same technical effect, the parts and beneficial effects that are the same as those in the method embodiment will not be described in detail here.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

As shown in FIG. 7, one embodiment of the present disclosure provides an information transmission device 700. The information transmission device 700 can be applied to a base station. The device 700 includes:

a first receiving unit 710 used to receive first SRS and position information of at least two first devices sent by the at least two first devices;
a processing unit 720 used to determine a correction parameter according to the first SRS and position information of the at least two first devices sent by the at least two first devices; where the correction parameter is used to correct a carrier phase measurement value;
a transmission unit 730 used to transmit second information to an LMF entity; where the second information includes the correction parameter.

Optionally, the information transmission device 700 further includes:

a second receiving unit used to receive a second SRS sent by the target UE;
a measurement unit used to perform carrier phase measurement according to the second SRS to obtain a carrier phase measurement value;
a second transmission unit used to transmit the carrier phase measurement value to the LMF entity.

Optionally, the second information further includes at least one of the following:

reliability information of the correction parameter;
reception channel timing error group ID corresponding to the correction parameter;
reception beam identifier information corresponding to the correction parameter;
valid time range of the correction parameter; or,
reporting time stamp of the correction parameter.

Optionally, the processing unit 720 is further used to:

determine a distance difference between the at least two first devices and the base station according to the position information of the at least two first devices and the position information of the base station;
determine a carrier phase difference for receiving the SRS of the at least two first devices based on the first SRS of the at least two first devices;
determine a timing error correction parameter according to the distance difference and the carrier phase difference, and determine the timing error correction parameter as the correction parameter.

Optionally, the processing unit 720 is further used to:

determine a timing error correction parameter at a first moment according to first SRS and position information of at least two first devices at the first moment;
determine a timing error correction parameter at a second moment according to first SRS and position information of at least two first devices at the second moment;
determine a timing error correction parameter change rate according to the timing error correction parameter at the first moment and the timing error correction parameter at the second moment, and determine the timing error correction parameter and the timing error correction parameter change rate as the correction parameter.

Optionally, the transmission unit 730 is further used to:

transmit one correction parameter to the LMF entity; where the correction parameter includes: a timing error correction parameter used to correct a carrier phase measurement value, or the correction parameter includes: the timing error correction parameter and the timing error correction parameter change rate;
or,
transmit one correction parameter corresponding to each moment to the LMF entity at N moments, respectively; where the correction parameter includes: the timing error correction parameter and the timing error correction parameter change rate, where N is an integer greater than 1.

Optionally, the transmission unit 730 is further used to:

transmit the second information to the LMF entity, in a periodic transmission manner;
or,
transmit the second information to the LMF entity, according to high-layer signaling;
or,
transmit the second information to the LMF entity when the base station determines that a triggering condition for correction parameter reporting is met.

Optionally, the triggering condition for the correction parameter reporting may include: a parameter value of the reliability information reaches a first threshold.
It is to be noted here that the above device provided in the embodiment of the present disclosure can implement all the method steps implemented in the above method embodiment on the base station side, and can achieve the same technical effect. The parts and beneficial effects of this embodiment that are the same as those in the method embodiment will not be described in detail here.
In order to better achieve the above object, one embodiment of the present disclosure provides an information transmission device, which includes a memory, a transceiver and a processor. The memory is used to store a computer program; the transceiver is used to send and receive data under the control of the processor. The processor is used to read the computer program in the memory and perform the following operations:

receiving first SRS and position information of at least two first devices sent by the at least two first devices;
determining a correction parameter according to the first SRS and position information of the at least two first devices sent by the at least two first devices; where the correction parameter is used to correct a carrier phase measurement value;
transmitting second information to an LMF entity; where the second information includes the correction parameter.

Optionally, the processor is used to read the computer program in the memory and perform the following operations:

receiving a second SRS sent by the target UE;

performing carrier phase measurement according to the second SRS to obtain a carrier phase measurement value;

transmitting the carrier phase measurement value to the LMF entity.

Optionally, the second information further includes at least one of the following:

reliability information of the correction parameter;

reception channel timing error group ID corresponding to the correction parameter;

reception beam identifier information corresponding to the correction parameter;

valid time range of the correction parameter; or,

reporting time stamp of the correction parameter.

Optionally, the processor is used to read the computer program in the memory and perform the following operations:

determining a distance difference between the at least two first devices and the base station according to the position information of the at least two first devices and the position information of the base station;

determining a carrier phase difference for receiving the SRS of the at least two first devices based on the first SRS of the at least two first devices;

determining a timing error correction parameter according to the distance difference and the carrier phase difference, and determining the timing error correction parameter as the correction parameter.

Optionally, the processor is used to read the computer program in the memory and perform the following operations:

determining a timing error correction parameter at a first moment according to first SRS and position information of at least two first devices at the first moment;

determining a timing error correction parameter at a second moment according to first SRS and position information of at least two first devices at the second moment;

determining a timing error correction parameter change rate according to the timing error correction parameter at the first moment and the timing error correction parameter at the second moment, and determining the timing error correction parameter and the timing error correction parameter change rate as the correction parameter.

Optionally, the processor is used to read the computer program in the memory and perform the following operations:

transmitting one correction parameter to the LMF entity; where the correction parameter includes: a timing error correction parameter used to correct a carrier phase measurement value, or the correction parameter includes: the timing error correction parameter and the timing error correction parameter change rate;

or,

transmitting one correction parameter corresponding to each moment to the LMF entity at N moments, respectively; where the correction parameter includes: the timing error correction parameter and the timing error correction parameter change rate, where N is an integer greater than 1.

Optionally, the processor is used to read the computer program in the memory and perform the following operations:

transmitting the second information to the LMF entity, in a periodic transmission manner;

or,

transmitting the second information to the LMF entity, according to high-layer signaling;

or,

transmitting the second information to the LMF entity when the base station determines that a triggering condition for correction parameter reporting is met.

Optionally, the triggering condition for the correction parameter reporting may include: a parameter value of the reliability information reaches a first threshold.

A bus architecture may include any number of interconnected bus and bridge. Specifically, various circuits of one or more processors, which are represented by the processor, and one or more memories, which are represented by the memory, are linked together. The bus architecture may link various other circuits, such as a peripheral device, voltage regulator and a power management circuit together. These features are well known in this field; therefore, this disclosure does not make further description on these features. The bus interface provides an interface. The transceiver may be multiple elements, including a transmitter and a receiver and provide units, which communicate with other devices on the transmission medium. The transmission medium includes radio channels, wired channels, optical cables, etc. The processor is responsible for managing the bus architecture and the normal processing. The memory may be used to store data used by the processor for performing operations.

The processor may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided in the embodiment of the present disclosure can implement all the method steps implemented in the above method embodiment on the base station side, and can achieve the same technical effect. The parts and beneficial effects of this embodiment that are the same as those in the method embodiment will not be described in detail here.

One embodiment of the present disclosure provides a processor-readable storage medium, including a computer program stored thereon; where the computer program is used to cause a processor to perform steps of the above information transmission method on the base station side, and can achieve the same technical effect, the parts and beneficial effects that are the same as those in the method embodiment will not be described in detail here.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

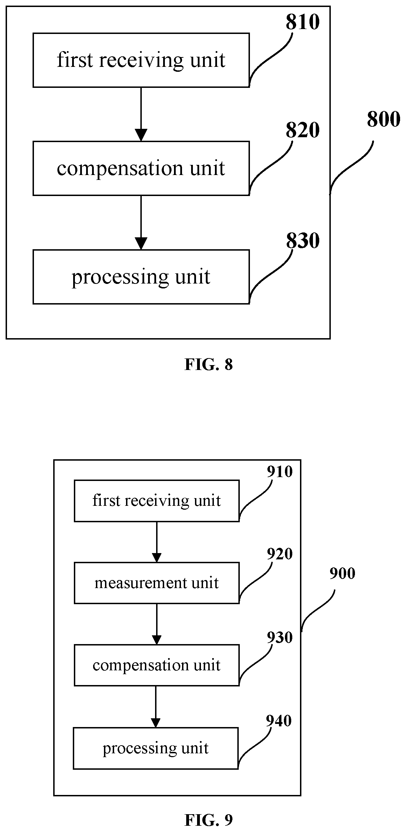

As shown in FIG. 8, one embodiment of the present disclosure provides a carrier phase positioning device 800. Optionally, the carrier phase positioning device 800 can be applied to the LMF entity side. The device 800 includes:

a first receiving unit 810 used to receive a correction parameter and a carrier phase measurement value of a target UE;
a compensation unit 820 used to perform compensation processing on the carrier phase measurement value according to the correction parameter;
a processing unit 830 used to perform positioning calculation processing for the target UE according to the compensated carrier phase measurement value.

Optionally, the first receiving unit 810 is further used to,

receive first information transmitted by a first device, and receive a carrier phase measurement value transmitted by the target UE; where the first information includes a correction parameter determined by the first device; and/or,
receive second information transmitted by a base station, and receive a carrier phase measurement value of measuring a sounding reference signal (SRS) of the target UE, transmitted by the base station; where the second information includes a correction parameter determined by the base station.

Optionally, the first information further includes at least one of the following:

reliability information of the correction parameter;
base station identifier information;
transmission channel timing error group ID;
reception channel timing error group ID corresponding to the correction parameter;
reception beam identifier information corresponding to the correction parameter;
valid time range of the correction parameter; or,
reporting time stamp of the correction parameter;
and/or,
the second information further includes at least one of the following:

reliability information of the correction parameter;
reception channel timing error group ID corresponding to the correction parameter;
reception beam identifier information corresponding to the correction parameter;
valid time range of the correction parameter; or,
reporting time stamp of the correction parameter.

Optionally, the compensation unit 820 is further used to,

determine a carrier phase measurement value of an optimal link, according to the reliability information;
perform compensation processing on the carrier phase measurement value of the optimal link according to the correction parameter.

Optionally, the correction parameter includes: a timing error correction parameter used to correct the carrier phase measurement value. The compensation unit 820 is further used to:
determine a sum of the carrier phase measurement value of the optimal link and the timing error correction parameter as the compensated carrier phase measurement value.

Optionally, the correction parameter includes: a timing error correction parameter used to correct a carrier phase measurement value, and a time change rate of the timing error correction parameter. The compensation unit 820 is further used to:

when performing compensation processing on the carrier phase measurement value of the optimal link according to the correction parameter,
determine a sum of a carrier phase measurement value of the optimal link at a first moment and the timing error correction parameter at the first moment as a compensated carrier phase measurement value at the first moment; and/or,
determine a timing error correction parameter at a second moment based on the timing error correction parameter at the first moment and the time change rate; and determine a sum of the carrier phase measurement value of the optimal link at the second moment and the timing error correction parameter at the second moment, as the compensated carrier phase measurement value at the second moment.

Optionally, the first receiving unit 810 is further used to:
receive N correction parameters; where the correction parameters include: a timing error correction parameter used to correct a carrier phase measurement value and a time change rate of the timing error correction parameter, N is a positive integer greater than 1.

The compensation unit 820 is further used to:

determine a first timing error correction parameter and a first time change rate according to the first timing error correction parameter;
determine a second timing error correction parameter based on the first timing error correction parameter and the first time change rate;
determine a sum of the carrier phase measurement value of the optimal link and the second timing error correction parameter as a compensated carrier phase measurement value.

Optionally, the N correction parameters include: correction parameters transmitted by one first device or base station at N moments, respectively; or correction parameters transmitted by N first devices or base stations at the same moment.

Optionally, the compensation unit 820 is further used to:

determine a sum of weighted timing error correction parameters in the N correction parameters as the first timing error correction parameter; and determine a sum of weighted time change rates in the N correction parameters as the first time change rate;
or,
determine an average of timing error correction parameters in the N correction parameters as the first timing error correction parameter; and determine an average of time change rates in the N correction parameters value as the first time change rate;
or,
determine a maximum timing error correction parameter or a minimum timing error correction parameter in the N correction parameters as the first timing error correction parameter; and determine a time change rate corresponding to the first timing error correction parameter as the first time change rate.

It is to be noted here that the above device provided in the embodiment of the present disclosure can implement all the method steps implemented in the above method embodiment on the LMF entity side, and can achieve the same technical effect. The parts and beneficial effects of this embodiment that are the same as those in the method embodiment will not be described in detail here.

In order to better achieve the above object, the present disclosure provides an information transmission device including a memory, a transceiver and a processor. The memory is used to store a computer program; the transceiver is used to send and receive data under the control of the processor. The processor is used to read the computer program in the memory and perform the following operations:

receiving a correction parameter and a carrier phase measurement value of a target UE;
performing compensation processing on the carrier phase measurement value according to the correction parameter;
performing positioning calculation processing for the target UE according to the compensated carrier phase measurement value.

Optionally, the processor is used to read the computer program in the memory and perform the following operations:

receiving first information transmitted by a first device, and receiving a carrier phase measurement value transmitted by the target UE; where the first information includes a correction parameter determined by the first device; and/or,
receiving second information transmitted by a base station, and receiving a carrier phase measurement value of measuring a sounding reference signal (SRS) of the target UE, transmitted by the base station; where the second information includes a correction parameter determined by the base station.

Optionally, the first information further includes at least one of the following:

reliability information of the correction parameter;
base station identifier information;
transmission channel timing error group ID;
reception channel timing error group ID corresponding to the correction parameter;
reception beam identifier information corresponding to the correction parameter;
valid time range of the correction parameter; or,
reporting time stamp of the correction parameter;
and/or,
the second information further includes at least one of the following:

reliability information of the correction parameter;
reception channel timing error group ID corresponding to the correction parameter;
reception beam identifier information corresponding to the correction parameter;
valid time range of the correction parameter; or,
reporting time stamp of the correction parameter.

Optionally, the processor is used to read the computer program in the memory and perform the following operations:

determining a carrier phase measurement value of an optimal link, according to the reliability information;
performing compensation processing on the carrier phase measurement value of the optimal link according to the correction parameter.

Optionally, the correction parameter includes: a timing error correction parameter used to correct the carrier phase measurement value. The processor is used to read the computer program in the memory and perform the following operations:
determining a sum of the carrier phase measurement value of the optimal link and the timing error correction parameter as the compensated carrier phase measurement value.

Optionally, the correction parameter includes: a timing error correction parameter used to correct a carrier phase measurement value, and a time change rate of the timing error correction parameter. The processor is used to read the computer program in the memory and perform the following operations:

when performing compensation processing on the carrier phase measurement value of the optimal link according to the correction parameter,
determining a sum of a carrier phase measurement value of the optimal link at a first moment and the timing error correction parameter at the first moment as a compensated carrier phase measurement value at the first moment;

and/or,

determining a timing error correction parameter at a second moment based on the timing error correction parameter at the first moment and the time change rate; and determining a sum of the carrier phase measurement value of the optimal link at the second moment and the timing error correction parameter at the second moment, as the compensated carrier phase measurement value at the second moment.

Optionally, the processor is used to read the computer program in the memory and perform the following operations:

receiving N correction parameters; where the correction parameters include: a timing error correction parameter used to correct a carrier phase measurement value and a time change rate of the timing error correction parameter, N is a positive integer greater than 1;

determining a first timing error correction parameter and a first time change rate according to the N correction parameters;

determining a second timing error correction parameter based on the first timing error correction parameter and the first time change rate;

determining a sum of the carrier phase measurement value of the optimal link and the second timing error correction parameter as a compensated carrier phase measurement value.

Optionally, the N correction parameters include: correction parameters transmitted by one first device or base station at N moments, respectively; or correction parameters transmitted by N first devices or base stations at the same moment.

Optionally, the processor is used to read the computer program in the memory and perform the following operations:

determining a sum of weighted timing error correction parameters in the N correction parameters as the first timing error correction parameter; and determining a sum of weighted time change rates in the N correction parameters as the first time change rate;

or,

determining an average of timing error correction parameters in the N correction parameters as the first timing error correction parameter; and determining an average of time change rates in the N correction parameters value as the first time change rate;

or,

determining a maximum timing error correction parameter or a minimum timing error correction parameter in the N correction parameters as the first timing error correction parameter; and determining a time change rate corresponding to the first timing error correction parameter as the first time change rate.

A bus architecture may include any number of interconnected bus and bridge. Specifically, various circuits of one or more processors, which are represented by the processor, and one or more memories, which are represented by the memory, are linked together. The bus architecture may link various other circuits, such as a peripheral device, voltage regulator and a power management circuit together. These features are well known in this field; therefore, this disclosure does not make further description on these features. The bus interface provides an interface. The transceiver may be multiple elements, including a transmitter and a receiver and provide units, which communicate with other devices on the transmission medium. The transmission medium includes radio channels, wired channels, optical cables, etc. The processor is responsible for managing the bus architecture and the normal processing. The memory may be used to store data used by the processor for performing operations.

The processor may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided in the embodiment of the present disclosure can implement all the method steps implemented in the above method embodiment on the LMF entity side, and can achieve the same technical effect. The parts and beneficial effects of this embodiment that are the same as those in the method embodiment will not be described in detail here.

One embodiment of the present disclosure provides a processor-readable storage medium, including a computer program stored thereon; where the computer program is used to cause a processor to perform steps of the above information transmission method on the LMF entity side, and can achieve the same technical effect, the parts and beneficial effects that are the same as those in the method embodiment will not be described in detail here.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

As shown in FIG. 9, one embodiment of the present disclosure provides a carrier phase positioning device 900. Optionally, the carrier phase positioning device 900 can be applied to a UE. The device 900 includes:

a first receiving unit 910 used to receive first information and PRSs transmitted by at least two second devices; where the first information includes a correction parameter determined by a first device;

a measurement unit 920 used to perform carrier phase measurement based on the PRS transmitted by at least two second devices, thereby obtaining a carrier phase measurement value;

a compensation unit 930 used to perform compensation processing on the carrier phase measurement value according to the first information;

a processing unit 940 used to perform positioning calculation processing based on the compensated carrier phase measurement value.

Optionally, the first receiving unit 910 is further used to:

receive first information transmitted by the first device;
and/or,
receive first information transmitted by a location management function (LMF) entity.

Optionally, the first information further includes at least one of the following:

reliability information of the correction parameter;
base station identifier information;
transmission channel timing error group ID;
reception channel timing error group ID corresponding to the correction parameter;
reception beam identifier information corresponding to the correction parameter;
valid time range of the correction parameter; or,
reporting time stamp of the correction parameter.

Optionally, the compensation unit 930 is further used to:
determine a sum of the carrier phase measurement value of the optimal link and the timing error correction parameter as the compensated carrier phase measurement value.

Optionally, the correction parameter includes: a timing error correction parameter used to correct a carrier phase measurement value, and a time change rate of the timing error correction parameter. The compensation unit 930 is further used to:

determine a sum of a carrier phase measurement value of the optimal link at a first moment and the timing error correction parameter at the first moment as a compensated carrier phase measurement value at the first moment; and/or,

determine a timing error correction parameter at a second moment based on the timing error correction parameter at the first moment and the time change rate; and determine a sum of the carrier phase measurement value of the optimal link at the second moment and the timing error correction parameter at the second moment, as the compensated carrier phase measurement value at the second moment.

Optionally, the first receiving unit 910 is further used to:
receive N correction parameters and the reliability information; where the correction parameters include: a timing error correction parameter used to correct a carrier phase measurement value and a time change rate of the timing error correction parameter, N is a positive integer greater than 1.

The compensation unit 930 is further used to:

determine a first timing error correction parameter and a first time change rate according to the N correction parameters;

determine a second timing error correction parameter based on the first timing error correction parameter and the first time change rate;

determine a sum of the carrier phase measurement value of the optimal link and the second timing error correction parameter as a compensated carrier phase measurement value.

Optionally, the N correction parameters include: correction parameters transmitted by one first device or LMF entities at N moments, respectively; or correction parameters transmitted by N first devices or LMF entities at the same moment.

Optionally, the compensation unit 930 is further used to:

determine a sum of weighted timing error correction parameters in the N correction parameters as the first timing error correction parameter; and determine a sum of weighted time change rates in the N correction parameters as the first time change rate;

or,

determine an average of timing error correction parameters in the N correction parameters as the first timing error correction parameter; and determine an average of time change rates in the N correction parameters value as the first time change rate;

or,

determine a maximum timing error correction parameter or a minimum timing error correction parameter in the N correction parameters as the first timing error correction parameter; and determine a time change rate corresponding to the first timing error correction parameter as the first time change rate.

It is to be noted here that the above device provided in the embodiment of the present disclosure can implement all the method steps implemented in the above method embodiment on the UE side, and can achieve the same technical effect. The parts and beneficial effects of this embodiment that are the same as those in the method embodiment will not be described in detail here.

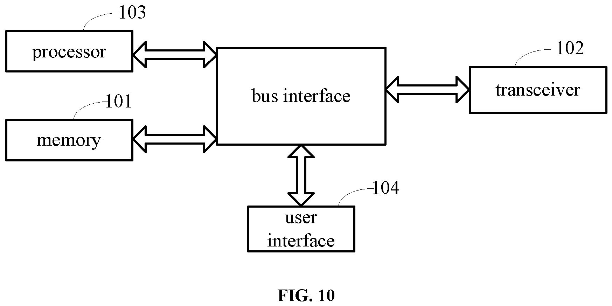

As shown in FIG. 10, one embodiment of the present disclosure provides a UE, including a memory 101, a transceiver 102 and a processor 103. The memory 101 is used to store a computer program; the transceiver 102 is used to send and receive data under the control of the processor 103. The processor 103 is used to read the computer program in the memory and perform the following operations:

receiving first information and PRSs transmitted by at least two second devices; where the first information includes a correction parameter determined by a first device;

performing carrier phase measurement based on the PRS transmitted by at least two second devices, thereby obtaining a carrier phase measurement value;

performing compensation processing on the carrier phase measurement value according to the first information;

performing positioning calculation processing based on the compensated carrier phase measurement value.

The processor 103 is used to read the computer program in the memory and perform the following operations:

receiving first information transmitted by the first device;

and/or,

receiving first information transmitted by a location management function (LMF) entity.

Optionally, the first information further includes at least one of the following:

reliability information of the correction parameter;

base station identifier information;

transmission channel timing error group ID;

reception channel timing error group ID corresponding to the correction parameter;

reception beam identifier information corresponding to the correction parameter;

valid time range of the correction parameter; or,

reporting time stamp of the correction parameter.

The processor 103 is used to read the computer program in the memory and perform the following operations:

determining a carrier phase measurement value of the optimal link based on the reliability information;

according to the correction parameter, compensating the carrier phase measurement value of the optimal link.

Optionally, the correction parameter includes a timing error correction parameter used to correct the carrier phase measurement value. The processor 103 is used to read the computer program in the memory 101 and perform the following operations:

determining a sum of the carrier phase measurement value of the optimal link and the timing error correction parameter as the compensated carrier phase measurement value.

Optionally, the correction parameter includes a timing error correction parameter used to correct a carrier phase measurement value, and a time change rate of the timing error correction parameter. The processor 103 is used to read the computer program in the memory 101 and perform the following operations:

determining a sum of a carrier phase measurement value of the optimal link at a first moment and the timing error correction parameter at the first moment as a compensated carrier phase measurement value at the first moment; and/or,

determining a timing error correction parameter at a second moment based on the timing error correction parameter at the first moment and the time change rate; and determining a sum of the carrier phase measurement value of the optimal link at the second moment and the timing error correction parameter at the second moment, as the compensated carrier phase measurement value at the second moment.

Optionally, the processor 103 is used to read the computer program in the memory 101 and perform the following operations:

receiving N correction parameters and the reliability information; where the correction parameters include: a timing error correction parameter used to correct a carrier phase measurement value and a time change rate of the timing error correction parameter, N is a positive integer greater than 1;

determining a first timing error correction parameter and a first time change rate according to the N correction parameters;

determining a second timing error correction parameter based on the first timing error correction parameter and the first time change rate;

determining a sum of the carrier phase measurement value of the optimal link and the second timing error correction parameter as a compensated carrier phase measurement value.

Optionally, the N correction parameters include: correction parameters transmitted by one first device or LMF entity at N moments, respectively; or correction parameters transmitted by N first devices or LMF entities at the same moment.

Optionally, the processor 103 is used to read the computer program in the memory 101 and perform the following operations:

determining a sum of weighted timing error correction parameters in the N correction parameters as the first timing error correction parameter; and determining a sum of weighted time change rates in the N correction parameters as the first time change rate;

or,

determining an average of timing error correction parameters in the N correction parameters as the first timing error correction parameter; and determining an average of time change rates in the N correction parameters value as the first time change rate;

or,

determining a maximum timing error correction parameter or a minimum timing error correction parameter in the N correction parameters as the first timing error correction parameter; and determining a time change rate corresponding to the first timing error correction parameter as the first time change rate.

In FIG. 10, a bus architecture may include any number of interconnected bus and bridge. Specifically, various circuits of one or more processors, which are represented by the processor 103, and one or more memories, which are represented by the memory 101, are linked together. The bus architecture may link various other circuits, such as a peripheral device, voltage regulator and a power management circuit together. These features are well known in this field; therefore, this disclosure does not make further description on these features. The bus interface provides an interface. The transceiver 102 may be multiple elements, including a transmitter and a receiver and provide units, which communicate with other devices on the transmission medium. The transmission medium includes radio channels, wired channels, optical cables, etc. For different UEs, a user interface 104 may be an interface that can be connected to external or internal devices. The connected devices include but are not limited to a small keyboard, a display, a speaker, a microphone, a joystick, etc.

The processor 103 is responsible for managing the bus architecture and the normal processing. The memory 101 may be used to store data used by the processor 103 for performing operations.

The processor 103 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

It is to be noted here that the above device provided in the embodiment of the present disclosure can implement all the method steps implemented in the above method embodiment on the UE side, and can achieve the same technical effect. The parts and beneficial effects of this embodiment that are the same as those in the method embodiment will not be described in detail here.

One embodiment of the present disclosure provides a processor-readable storage medium, including a computer program stored thereon; where the computer program is used to cause a processor to perform steps of the above information transmission method on the UE side, and can achieve the same technical effect, the parts and beneficial effects that are the same as those in the method embodiment will not be described in detail here.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

In addition, it is to be pointed out that in the device and method of the present disclosure, apparently, each component or each step can be decomposed and/or recombined. The decomposition and/or recombination should be regarded as equivalent schemes of the present disclosure. Moreover, the steps of performing the above series of processing can naturally be performed in chronological order according to the order of description, but it is not necessary to perform them in chronological order, and some steps can be performed in parallel or independently of each other. For those of ordinary skill in the art, it is understandable that all or any steps or components of the method and device of the present disclosure can be implemented in hardware, firmware, software or a combination thereof in any computing device (including processors, storage media, etc.) or a network of computing devices, which can be achieved by those of ordinary skill in the art using their basic programming skills after reading the description of the present disclosure.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

**Claims**

1. An information transmission method, comprising:

    receiving, by a first device, positioning reference signals (PRS) and position information of at least two second devices, sent by the at least two second devices;
    determining, by the first device, a correction parameter according to the PRS and position information of the at least two second devices; wherein the correction parameter is used to correct a carrier phase measurement value of a target user equipment (UE);
    transmitting, by the first device, first information to the target UE or a location management function (LMF) entity; wherein the first information includes the correction parameter.

2. The method according to claim 1, wherein the first information further includes at least one of the following:

    reliability information of the correction parameter;
    base station identifier information;
    transmission channel timing error group identifier (ID);
    reception channel timing error group ID corresponding to the correction parameter;
    reception beam identifier information corresponding to the correction parameter;
    valid time range of the correction parameter; or,

reporting time stamp of the correction parameter.

3. The method according to claim 1, wherein the determining, by the first device, a correction parameter according to the PRS and position information of the at least two second devices, includes:

determining, by the first device, a distance difference between the at least two second devices and the first device, according to the position information of the at least two second devices and position information of the first device; according to the PRS of the at least two second devices, determining, by the first device, a carrier phase difference for receiving the PRS of the at least two second devices; determining, by the first device, a timing error correction parameter according to the distance difference and the carrier phase difference, and determining the timing error correction parameter as the correction parameter.

4. The method according to claim 3, wherein the determining, by the first device, a timing error correction parameter according to the distance difference and the carrier phase difference, includes:

determining the timing error correction parameter with the following formula:

$$\lambda \varphi_{corr}^{ij,Tx\ TEGi,j}(t_1) = d_{l,Rx\ TEGi,j}^{ij,Tx\ TEGi,j} - \lambda \varphi_{l,Rx\ TEGi,j}^{ij,Tx\ TEGi,j}(t_1)$$

wherein $\lambda \varphi_{corr}^{ij,Tx\ TEGi,j}(t_1)$ is the timing error correction parameter; $d_{l,Rx\ TEGi,j}^{ij,Tx\ TEGi,j}$ is the distance difference; $\varphi_{l,Rx\ TEGi,j}^{ij,Tx\ TEGi,j}(t_1)$ is the carrier phase difference; and $\lambda$ is a carrier wavelength.

5. The method according to claim 1, wherein the determining, by the first device, a correction parameter according to the PRS and position information of the at least two second devices, includes:

determining, by the first device, a timing error correction parameter at a first moment according to PRS and position information of the at least two second devices at the first moment; determining, by the first device, a timing error correction parameter at a second moment according to PRS and position information of the at least two second devices at the second moment; determining, by the first device, a timing error correction parameter change rate according to the timing error correction parameter at the first moment and the timing error correction parameter at the second moment, and determining the timing error correction parameter and the timing error correction parameter change rate as the correction parameter.

6. The method according to claim 5, wherein the determining, by the first device, a timing error correction parameter change rate according to the timing error correction parameter at the first moment and the timing error correction parameter at the second moment, includes:

determining the timing error correction parameter change rate through the following formula:

$$\lambda \dot{\varphi}_{corr}^{ij,Tx\ TEGi,j} = \frac{\lambda \varphi_{corr}^{ij,Tx\ TEGi,j}(t_1) - \lambda \varphi_{corr}^{ij,Tx\ TEGi,j}(t_0)}{t_1 - t_0}$$

where $\lambda \dot{\varphi}_{corr}^{ij,Tx\ TEGi,j}$ is the timing error correction parameter change rate; $\lambda \varphi_{corr}^{ij,Tx\ TEGi,j}(t_0)$ is the timing error correction parameter at the first moment; $\lambda \varphi_{corr}^{ij,Tx\ TEGi,j}(t_1)$ is the timing error correction parameter at the second moment; $t_0$ is the first moment; and $t_1$ is the second moment.

7. The method according to any one of claims 1 to 6, wherein the transmitting, by the first device, first information to the target UE or a location management function (LMF) entity, includes:

transmitting, by the first device, one correction parameter to the target UE or the LMF entity; wherein the correction parameter includes: the timing error correction parameter, or the correction parameter includes: the timing error correction parameter and the timing error correction parameter change rate;

or,

transmitting, by the first device, a correction parameter corresponding to each moment to the target UE or the LMF entity at N moments, respectively; wherein the correction parameter includes: the timing error correction parameter and the timing error correction parameter change rate, wherein N is a positive integer greater than 1.

8. The method according to any one of claims 1 to 6, wherein the transmitting, by the first device, first information to the target UE or a location management function (LMF) entity, includes:

transmitting the first information to the target UE or the LMF entity, in a periodic transmission manner;

or,

transmitting the first information to the target UE or the LMF entity, according to high-layer signaling;

or,

transmitting the first information to the target UE or the LMF entity when the first device determines that a triggering condition for correction parameter reporting is met.

9. The method according to claim 8, wherein the triggering condition for the correction parameter reporting includes: a parameter value of the reliability information reaches a first threshold.

10. An information transmission method, comprising:

receiving, by a base station, first sounding reference signal (SRS) and position information of at least two first devices sent by the at least two first devices;

determining, by the base station, a correction parameter according to the first SRS and position information of the at least two first devices sent by the at least two first devices; wherein the correction parameter is used to correct a carrier phase measurement value;

transmitting, by the base station, second information to a location management function (LMF) entity; wherein the second information includes the correction parameter.

11. The method according to claim 10, wherein the method further includes:

receiving, by the base station, a second SRS sent by a target user equipment (UE);

performing, by the base station, carrier phase measurement according to the second SRS to obtain a carrier phase measurement value;

transmitting, by the base station, the carrier phase measurement value to the LMF entity.

12. The method according to claim 10, wherein the second information further includes at least one of the following:

reliability information of the correction parameter;

reception channel timing error group identifier (ID) corresponding to the correction parameter;

reception beam identifier information corresponding to the correction parameter;

valid time range of the correction parameter; or,

reporting time stamp of the correction parameter.

13. The method according to claim 10, wherein the determining, by the base station, a correction parameter according to the first SRS and position information of the at least two first devices sent by the at least two first devices, includes:

determining, by the base station, a distance difference between the at least two first devices and the base station according to the position information of the at least two first devices and the position information of the base station;

determining, by the base station, a carrier phase difference for receiving the SRS of the at least two first devices based on the first SRS of the at least two first devices;

determining, by the base station, a timing error correction parameter according to the distance difference and the carrier phase difference, and determining the timing error correction parameter as the correction parameter.

14. The method according to claim 10, wherein the determining, by the base station, a correction parameter according to the first SRS and position information of the at least two first devices sent by the at least two first devices, includes:

> determining, by the base station, a timing error correction parameter at a first moment according to first SRS and position information of the at least two first devices at the first moment;
> determining, by the base station, a timing error correction parameter at a second moment according to first SRS and position information of the at least two first devices at the second moment;
> determining, by the base station, a timing error correction parameter change rate according to the timing error correction parameter at the first moment and the timing error correction parameter at the second moment, and determining the timing error correction parameter and the timing error correction parameter change rate as the correction parameter.

15. The method according to any one of claims 10 to 14, wherein the transmitting, by the base station, the carrier phase measurement value to the LMF entity, includes:

> transmitting, by the base station, one correction parameter to the LMF entity; wherein the correction parameter includes: the timing error correction parameter used to correct a carrier phase measurement value, or the correction parameter includes: the timing error correction parameter and the timing error correction parameter change rate;
> or,
> transmitting, by the base station, one correction parameter corresponding to each moment to the LMF entity at N moments, respectively; wherein the correction parameter includes: the timing error correction parameter and the timing error correction parameter change rate, where N is an integer greater than 1.

16. The method according to any one of claims 10 to 14, wherein the transmitting, by the base station, the carrier phase measurement value to the LMF entity, includes:

> transmitting, by the base station, the second information to the LMF entity, in a periodic transmission manner;
> or,
> transmitting, by the base station, the second information to the LMF entity, according to high-layer signaling;
> or,
> transmitting the second information to the LMF entity when the base station determines that a triggering condition for correction parameter reporting is met.

17. The method according to claim 16, wherein the triggering condition for the correction parameter reporting includes: a parameter value of the reliability information reaches a first threshold.

18. A carrier phase positioning method, comprising:

> receiving, by a location management function (LMF) entity, a correction parameter and a carrier phase measurement value of a target user equipment (UE);
> performing, by the LMF entity, compensation processing on the carrier phase measurement value according to the correction parameter;
> performing, by the LMF entity, positioning calculation processing for the target UE according to the compensated carrier phase measurement value.

19. The method according to claim 18, wherein the receiving, by a location management function (LMF) entity, a correction parameter and a carrier phase measurement value of a target user equipment (UE), includes:

> receiving, by the LMF entity, first information transmitted by a first device, and receiving a carrier phase measurement value transmitted by the target UE; wherein the first information includes a correction parameter determined by the first device;
> and/or,
> receiving, by the LMF entity, second information transmitted by a base station, and receiving a carrier phase measurement value of measuring a sounding reference signal (SRS) of the target UE, transmitted by the base station; wherein the second information includes a correction parameter determined by the base station.

20. The method according to claim 19, wherein the first information further includes at least one of the following:

reliability information of the correction parameter;
base station identifier information;
transmission channel timing error group identifier (ID);
reception channel timing error group ID corresponding to the correction parameter;
reception beam identifier information corresponding to the correction parameter;
valid time range of the correction parameter; or,
reporting time stamp of the correction parameter;
and/or,
the second information further includes at least one of the following:

reliability information of the correction parameter;
reception channel timing error group ID corresponding to the correction parameter;
reception beam identifier information corresponding to the correction parameter;
valid time range of the correction parameter; or,
reporting time stamp of the correction parameter.

21. The method according to claim 20, wherein the performing, by the LMF entity, compensation processing on the carrier phase measurement value according to the correction parameter, includes:

determining, by the LMF entity, a carrier phase measurement value of an optimal link, according to the reliability information;
performing, by the LMF entity, compensation processing on the carrier phase measurement value of the optimal link according to the correction parameter.

22. The method according to claim 21, wherein the correction parameter includes: a timing error correction parameter;
the performing, by the LMF entity, compensation processing on the carrier phase measurement value of the optimal link according to the correction parameter, includes:
determining, by the LMF entity, a sum of the carrier phase measurement value of the optimal link and the timing error correction parameter as the compensated carrier phase measurement value.

23. The method according to claim 21, wherein the correction parameter includes: a timing error correction parameter and a time change rate of the timing error correction parameter;
the performing, by the LMF entity, compensation processing on the carrier phase measurement value of the optimal link according to the correction parameter, includes:

determining, by the LMF entity, a sum of a carrier phase measurement value of the optimal link at a first moment and the timing error correction parameter at the first moment as a compensated carrier phase measurement value at the first moment;
and/or,
determining, by the LMF entity, a timing error correction parameter at a second moment based on the timing error correction parameter at the first moment and the time change rate; and determining a sum of the carrier phase measurement value of the optimal link at the second moment and the timing error correction parameter at the second moment, as the compensated carrier phase measurement value at the second moment.

24. The method according to claim 21, wherein the receiving, by a location management function (LMF) entity, a correction parameter, includes:

receiving, by the LMF entity, N correction parameters; wherein the correction parameters include: a timing error correction parameter and a time change rate of the timing error correction parameter, N is a positive integer greater than 1;
the performing, by the LMF entity, compensation processing on the carrier phase measurement value of the optimal link according to the correction parameter, includes:

determining, by the LMF entity, a first timing error correction parameter and a first time change rate according to the N correction parameters;
determining, by the LMF entity, a second timing error correction parameter based on the first timing error correction parameter and the first time change rate;
determining, by the LMF entity, a sum of the carrier phase measurement value of the optimal link and the second timing error correction parameter as a compensated carrier phase measurement value.

25. The method according to claim 24, wherein the N correction parameters include: correction parameters transmitted by one first device or base station at N moments, respectively; or correction parameters transmitted by N first devices or base stations at the same moment.

26. The method according to claim 24, wherein the determining, by the LMF entity, a first timing error correction parameter and a first time change rate according to the N correction parameters, includes:

determining, by the LMF entity, a sum of weighted timing error correction parameters in the N correction parameters as the first timing error correction parameter; and determining a sum of weighted time change rates in the N correction parameters as the first time change rate;
or,
determining, by the LMF entity, an average of timing error correction parameters in the N correction parameters as the first timing error correction parameter; and determining an average of time change rates in the N correction parameters value as the first time change rate;
or,
determining, by the LMF entity, a maximum timing error correction parameter or a minimum timing error correction parameter in the N correction parameters as the first timing error correction parameter; and determining a time change rate corresponding to the first timing error correction parameter as the first time change rate.

27. A carrier phase positioning method, comprising:

receiving, by a user equipment (UE), first information and PRSs transmitted by at least two second devices; wherein the first information includes a correction parameter determined by a first device;
performing, by the UE, carrier phase measurement based on the PRS transmitted by the at least two second devices, thereby obtaining a carrier phase measurement value;
performing, by the UE, compensation processing on the carrier phase measurement value according to the first information;
performing, by the UE, positioning calculation processing based on the compensated carrier phase measurement value.

28. The method according to claim 27, wherein the receiving, by a user equipment (UE), first information, includes:

receiving, by the UE, first information transmitted by the first device;
and/or,
receiving, by the UE, first information transmitted by a location management function (LMF) entity.

29. The method according to claim 27 or 28, wherein the first information further includes at least one of the following:

reliability information of the correction parameter;
base station identifier information;
transmission channel timing error group identifier (ID);
reception channel timing error group ID corresponding to the correction parameter;
reception beam identifier information corresponding to the correction parameter;
valid time range of the correction parameter; or,
reporting time stamp of the correction parameter.

30. The method according to claim 29, wherein the performing, by the UE, compensation processing on the carrier phase measurement value according to the first information, includes:

determining, by the UE, a carrier phase measurement value of an optimal link based on the reliability information;
compensating, by the UE, the carrier phase measurement value of the optimal link according to the correction parameter.

31. The method according to claim 30, wherein the correction parameter includes a timing error correction parameter; wherein the compensating, by the UE, the carrier phase measurement value of the optimal link according to the correction parameter, includes:

determining, by the UE, a sum of the carrier phase measurement value of the optimal link and the timing error correction parameter as the compensated carrier phase measurement value.

32. The method according to claim 30, wherein the correction parameter includes a timing error correction parameter and a time change rate of the timing error correction parameter;

wherein the compensating, by the UE, the carrier phase measurement value of the optimal link according to the correction parameter, includes:

determining, by the UE, a sum of a carrier phase measurement value of the optimal link at a first moment and a timing error correction parameter at the first moment as a compensated carrier phase measurement value at the first moment;

and/or,

determining, by the UE, a timing error correction parameter at a second moment based on the timing error correction parameter at the first moment and the time change rate; and determining a sum of the carrier phase measurement value of the optimal link at the second moment and the timing error correction parameter at the second moment, as the compensated carrier phase measurement value at the second moment.

33. The method according to claim 30, wherein the UE receiving the correction parameter and reliability information, includes:

receiving, by the UE, N correction parameters and the reliability information; wherein the correction parameters include: a timing error correction parameter and a time change rate of the timing error correction parameter, N is a positive integer greater than 1;

wherein the compensating, by the UE, the carrier phase measurement value of the optimal link according to the correction parameter, includes:

determining, by the UE, a first timing error correction parameter and a first time change rate according to the N correction parameters;

determining, by the UE, a second timing error correction parameter based on the first timing error correction parameter and the first time change rate;

determining, by the UE, a sum of the carrier phase measurement value of the optimal link and the second timing error correction parameter as a compensated carrier phase measurement value.

34. The method according to claim 33, wherein the N correction parameters include: correction parameters transmitted by one first device or LMF entity at N moments, respectively; or correction parameters transmitted by N first devices or LMF entities at the same moment.

35. The method according to claim 33, wherein the determining, by the UE, a first timing error correction parameter and a first time change rate according to the N correction parameters, includes:

determining, by the UE, a sum of weighted timing error correction parameters in the N correction parameters as the first timing error correction parameter; and determining a sum of weighted time change rates in the N correction parameters as the first time change rate;

or,

determining, by the UE, an average of timing error correction parameters in the N correction parameters as the first timing error correction parameter; and determining an average of time change rates in the N correction parameters value as the first time change rate;

or,

determining, by the UE, a maximum timing error correction parameter or a minimum timing error correction parameter in the N correction parameters as the first timing error correction parameter; and determining a time change rate corresponding to the first timing error correction parameter as the first time change rate.

36. An information transmission device, comprising: a memory, a transceiver, and a processor;

wherein the memory is used to store a computer program; the transceiver is used to send and receive data under the control of the processor; the processor is used to read the computer program in the memory and perform the following operations:

receiving positioning reference signals (PRS) and position information of at least two second devices, sent by the at least two second devices;

determining a correction parameter according to the PRS and position information of the at least two second devices; wherein the correction parameter is used to correct a carrier phase measurement value of a target user equipment (UE);

transmitting first information to the target UE or a location management function (LMF) entity; wherein the first information includes the correction parameter.

37. The device according to claim 36, wherein the first information further includes at least one of the following:

reliability information of the correction parameter;

base station identifier information;

transmission channel timing error group identifier (ID);

reception channel timing error group ID corresponding to the correction parameter;

reception beam identifier information corresponding to the correction parameter;

valid time range of the correction parameter; or,

reporting time stamp of the correction parameter.

38. The device according to claim 36 or 37, wherein the processor is used to read the computer program in the memory and perform the following operations:

transmitting one correction parameter to the target UE or the LMF entity; wherein the correction parameter includes: the timing error correction parameter, or the correction parameter includes: the timing error correction parameter and the timing error correction parameter change rate;

or,

transmitting a correction parameter corresponding to each moment to the target UE or the LMF entity at N moments, respectively; wherein the correction parameter includes: the timing error correction parameter and the timing error correction parameter change rate, wherein N is a positive integer greater than 1.

39. The device according to claim 36 or 37, wherein the processor is used to read the computer program in the memory and perform the following operations:

transmitting the first information to the target UE or the LMF entity, in a periodic transmission manner;

or,

transmitting the first information to the target UE or the LMF entity, according to high-layer signaling;

or,

transmitting the first information to the target UE or the LMF entity when the first device determines that a triggering condition for correction parameter reporting is met.

40. An information transmission device, comprising:

a receiving unit configured to receive positioning reference signals (PRS) and position information of at least two second devices, sent by the at least two second devices;

a processing unit configured to determine a correction parameter according to the PRS and position information of the at least two second devices; wherein the correction parameter is used to correct a carrier phase measurement value of a target user equipment (UE);

a transmission unit configured to transmit first information to the target UE or a location management function (LMF) entity; wherein the first information includes the correction parameter.

41. An information transmission device, comprising: a memory, a transceiver, and a processor;

wherein the memory is used to store a computer program; the transceiver is used to send and receive data under the control of the processor; the processor is used to read the computer program in the memory and perform the following operations:

receiving first sounding reference signal (SRS) and position information of at least two first devices sent by the at least two first devices;

determining a correction parameter according to the first SRS and position information of the at least two first devices sent by the at least two first devices; wherein the correction parameter is used to correct a carrier phase measurement value;

transmitting second information to a location management function (LMF) entity; wherein the second information includes the correction parameter.

42. The device according to claim 41, wherein the processor is used to read the computer program in the memory and perform the following operations:

receiving a second SRS sent by a target user equipment (UE);
performing carrier phase measurement according to the second SRS to obtain a carrier phase measurement value;
transmitting the carrier phase measurement value to the LMF entity.

43. The device according to claim 41, wherein the second information further includes at least one of the following:

reliability information of the correction parameter;
reception channel timing error group identifier (ID) corresponding to the correction parameter;
reception beam identifier information corresponding to the correction parameter;
valid time range of the correction parameter; or,
reporting time stamp of the correction parameter.

44. The device according to any one of claims 41 to 43, wherein the processor is used to read the computer program in the memory and perform the following operations:

transmitting one correction parameter to the LMF entity; wherein the correction parameter includes: the timing error correction parameter used to correct a carrier phase measurement value, or the correction parameter includes: the timing error correction parameter and the timing error correction parameter change rate; or,
transmitting one correction parameter corresponding to each moment to the LMF entity at N moments, respectively; wherein the correction parameter includes: the timing error correction parameter and the timing error correction parameter change rate, where N is an integer greater than 1.

45. The device according to any one of claims 41 to 43, wherein the processor is used to read the computer program in the memory and perform the following operations:

transmitting the second information to the LMF entity, in a periodic transmission manner; or,
transmitting the second information to the LMF entity, according to high-layer signaling; or,
transmitting the second information to the LMF entity when the base station determines that a triggering condition for correction parameter reporting is met.

46. An information transmission device, comprising:

a receiving unit configured to receive first sounding reference signal (SRS) and position information of at least two first devices sent by the at least two first devices;
a processing unit configured to determine a correction parameter according to the first SRS and position information of the at least two first devices sent by the at least two first devices; wherein the correction parameter is used to correct a carrier phase measurement value;
a transmission unit configured to transmit second information to a location management function (LMF) entity; wherein the second information includes the correction parameter.

47. A carrier phase positioning device, comprising: a memory, a transceiver, and a processor;
wherein the memory is used to store a computer program; the transceiver is used to send and receive data under the control of the processor; the processor is used to read the computer program in the memory and perform the following operations:

receiving a correction parameter and a carrier phase measurement value of a target user equipment (UE);
performing compensation processing on the carrier phase measurement value according to the correction parameter;

performing positioning calculation processing for the target UE according to the compensated carrier phase measurement value.

48. The device according to claim 47, wherein the processor is used to read the computer program in the memory and perform the following operations:

receiving first information transmitted by a first device, and receiving a carrier phase measurement value transmitted by the target UE; wherein the first information includes a correction parameter determined by the first device;
and/or,
receiving second information transmitted by a base station, and receiving a carrier phase measurement value of measuring a sounding reference signal (SRS) of the target UE, transmitted by the base station; wherein the second information includes a correction parameter determined by the base station.

49. The device according to claim 48, wherein the first information further includes at least one of the following:

reliability information of the correction parameter;
base station identifier information;
transmission channel timing error group identifier (ID);
reception channel timing error group ID corresponding to the correction parameter;
reception beam identifier information corresponding to the correction parameter;
valid time range of the correction parameter; or,
reporting time stamp of the correction parameter;
and/or,
the second information further includes at least one of the following:

reliability information of the correction parameter;
reception channel timing error group ID corresponding to the correction parameter;
reception beam identifier information corresponding to the correction parameter;
valid time range of the correction parameter; or,
reporting time stamp of the correction parameter.

50. The device according to claim 49, wherein the processor is used to read the computer program in the memory and perform the following operations:

determining a carrier phase measurement value of an optimal link, according to the reliability information;
performing compensation processing on the carrier phase measurement value of the optimal link according to the correction parameter.

51. A carrier phase positioning device, comprising:

a first receiving unit configured to receive a correction parameter and a carrier phase measurement value of a target user equipment (UE);
a compensation unit configured to perform compensation processing on the carrier phase measurement value according to the correction parameter;
a processing unit configured to perform positioning calculation processing for the target UE according to the compensated carrier phase measurement value.

52. A carrier phase positioning device, comprising: a memory, a transceiver, and a processor;
wherein the memory is used to store a computer program; the transceiver is used to send and receive data under the control of the processor; the processor is used to read the computer program in the memory and perform the following operations:

receiving first information and PRSs transmitted by at least two second devices; wherein the first information includes a correction parameter determined by a first device;
performing carrier phase measurement based on the PRS transmitted by the at least two second devices, thereby obtaining a carrier phase measurement value;
performing compensation processing on the carrier phase measurement value according to the first information;

performing positioning calculation processing based on the compensated carrier phase measurement value.

53. The device according to claim 52, wherein the processor is used to read the computer program in the memory and perform the following operations:

   receiving first information transmitted by the first device;
   and/or,
   receiving first information transmitted by a location management function (LMF) entity.

54. The device according to claim 52 or 53, wherein the first information further includes at least one of the following:

   reliability information of the correction parameter;
   base station identifier information;
   transmission channel timing error group identifier (ID);
   reception channel timing error group ID corresponding to the correction parameter;
   reception beam identifier information corresponding to the correction parameter;
   valid time range of the correction parameter; or,
   reporting time stamp of the correction parameter.

55. The device according to claim 54, wherein the processor is used to read the computer program in the memory and perform the following operations:

   determining a carrier phase measurement value of an optimal link based on the reliability information;
   compensating the carrier phase measurement value of the optimal link according to the correction parameter.

56. A carrier phase positioning device, comprising:

   a first receiving unit configured to receive first information and PRSs transmitted by at least two second devices;
   a measurement unit configured to perform carrier phase measurement based on the PRS transmitted by the at least two second devices, thereby obtaining a carrier phase measurement value;
   a measurement unit configured to perform compensation processing on the carrier phase measurement value according to the first information;
   a processing unit configured to perform positioning calculation processing based on the compensated carrier phase measurement value.

57. A processor-readable storage medium, comprising a computer program stored thereon; wherein the computer program is used to cause a processor to perform the steps in the information transmission method according to any one of claims 1 to 9; or the computer program is used to cause the processor to perform the steps in the information transmission method according to any one of claims 10 to 17; or the computer program is used to cause the processor to perform the steps in the carrier phase positioning method according to any one of claims 18 to 26; or the computer program is used to cause the processor to perform the steps in the information transmission method according to any one of claims 27 to 35.

receiving, by a first device, PRS and position information of at least two second devices, sent by the at least two second devices /11

determining, by the first device, a correction parameter according to the PRS and position information of the at least two second devices; where the correction parameter is used to correct a carrier phase measurement value of a target UE /12

transmitting, by the first device, first information to a target UE or an LMF entity; where the first information includes the correction parameter 13

FIG. 1

receiving, by a base station, first SRS and position information of at least two first devices sent by the at least two first devices /21

determining, by the base station, a correction parameter according to the first SRS and position information of the at least two first devices sent by the at least two first devices; where the correction parameter is used to correct a carrier phase measurement value /22

transmitting, by the base station, second information to an LMF entity; where the second information includes the correction parameter /23

FIG. 2

receiving, by an LMF entity, a correction parameter and a carrier phase measurement value of a target UE  /31

performing, by the LMF entity, compensation processing on the carrier phase measurement value according to the correction parameter  /32

performing, by the LMF entity, positioning calculation processing for the target UE according to the compensated carrier phase measurement value  33

**FIG. 3**

receiving, by UE, first information and PRSs transmitted by at least two second devices; where the first information includes a correction parameter determined by a first device  /41

performing, by the UE, carrier phase measurement based on the PRS transmitted by at least two second devices, thereby obtaining a carrier phase measurement value  /42

performing, by the UE, compensation processing on the carrier phase measurement value according to the first information  /43

performing, by the UE, position calculation processing based on the compensated carrier phase measurement value  /44

**FIG. 4**

receiving unit 510

processing unit 520

transmission unit 530

500

**FIG. 5**

processor 603

bus interface

memory 601

transceiver 602

**FIG. 6**

first receiving unit 710

processing unit 720

transmission unit 730

700

**FIG. 7**

**810**

first receiving unit

**820**

compensation unit

**830**

processing unit

**800**

**FIG. 8**

**910**

first receiving unit

**920**

measurement unit

**930**

compensation unit

**940**

processing unit

**900**

**FIG. 9**

**FIG. 10**

## INTERNATIONAL SEARCH REPORT

International application No.

**PCT/CN2023/091441**

### A. CLASSIFICATION OF SUBJECT MATTER

H04W 64/00(2009.01)i; H04W 24/10(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; ENTXTC; DWPI; VEN; 3GPP: 定位, 参考信号, PRS, SRS, 时钟, 偏差, 误差, 校正, 校准, 纠错, 测量, 载波相位, 补偿, 位置管理功能, LMF, positioning, reference signal, clock, skew, offset, error, correction, calibration, measure, carrier phase, compensation, location management function

### C. DOCUMENTS CONSIDERED TO BE RELEVANT

| Category* | Citation of document, with indication, where appropriate, of the relevant passages | Relevant to claim No. |
|---|---|---|
| X | CN 112788733 A (DATANG MOBILE COMMUNICATIONS EQUIPMENT CO., LTD.) 11 May 2021 (2021-05-11) <br> description, paragraphs [0040]-[0048] and [0054]-[0337] | 1-57 |
| X | CATT. "Discussion of the Scope of Rel-17 NR Positioning Enhancements" <br> *3GPP TSG RAN WG Meeting #85 RP-191978,* 20 September 2019 (2019-09-20), <br> pages 5-7 | 1-57 |
| A | US 2019317224 A1 (MITSUBISHI ELECTRIC CORP.) 17 October 2019 (2019-10-17) <br> entire document | 1-57 |
| A | WO 2021169676 A1 (DATANG MOBILE COMMUNICATIONS EQUIPMENT CO., LTD.) 02 September 2021 (2021-09-02) <br> entire document | 1-57 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 August 2023** | **15 August 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/091441**

| Patent document cited in search report | | | Publication date (day/month/year) | Patent family member(s) | | | Publication date (day/month/year) |
|---|---|---|---|---|---|---|---|
| CN | 112788733 | A | 11 May 2021 | TW | 202119832 | A | 16 May 2021 |
| | | | | WO | 2021093642 | A1 | 20 May 2021 |
| | | | | KR | 20220097960 | A | 08 July 2022 |
| | | | | IN | 202227025603 | A | 29 July 2022 |
| | | | | EP | 4061068 | A1 | 21 September 2022 |
| | | | | US | 2022381922 | A1 | 01 December 2022 |
| | | | | JP | 2023501552 | W | 18 January 2023 |
| US | 2019317224 | A1 | 17 October 2019 | AU | 2016427714 | A1 | 02 May 2019 |
| | | | | EP | 3534182 | A1 | 04 September 2019 |
| | | | | JPWO | 2018078795 | A1 | 31 October 2019 |
| | | | | WO | 2018078795 | A1 | 03 May 2018 |
| WO | 2021169676 | A1 | 02 September 2021 | US | 2023100877 | A1 | 30 March 2023 |
| | | | | EP | 4114074 | A1 | 04 January 2023 |
| | | | | CN | 113316182 | A | 27 August 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210476532